# EUROPEAN PATENT SPECIFICATION

(11) **EP 2 095 553 B1**
(45) Date of publication and mention of the grant of the patent: **06.04.2011**
(21) Application number: 06818428.2
(22) Date of filing: 09.11.2006
(51) Int. Cl.: H04J 14/02, G02B 6/34

(54) **METHOD AND DEVICE FOR HITLESS TUNABLE OPTICAL FILTERING**
VERFAHREN UND EINRICHTUNG ZUR STÖRUNGSLOSEN ABSTIMMBAREN OPTISCHEN FILTERUNG
PROCÉDÉ ET DISPOSITIF POUR UN FILTRAGE OPTIQUE RÉGLABLE SANS À-COUP

(43) Date of publication of application: 02.09.2009
(73) Proprietor: PGT Photonics S.p.A., 20126 Milano (IT)
(72) Inventor: BOLLA, Lorenzo, 20126 Milano (IT); GALLI, Paola, 20126 Milano (IT); GHIDINI, Silvia, 20126 Milano (IT); ROMAGNOLI, Marco, 20126 Milano (IT); SOCCI, Luciano, 20126 Milano (IT)
(74) Representative: Tirloni, Bartolomeo
(86) International application number: PCT/EP2006/010723
(87) International publication number: WO 2008/055528

(56) References cited:
- WO-A-03/081324
- US-B1- 6 580 851

## Description

### Field of the invention

The present invention relates to the field of optical communication systems including hitless tunable optical filtering functionality, such as hitless tunable optical add and/or drop functionality.

### Background of the invention

A common technique to increase the transmission capacity of today optical communication systems is wavelength division multiplexing (WDM), wherein a plurality of optical channels, each having a respective optical frequency (and correspondingly respective optical wavelength), are multiplexed together in a single optical medium, such as for example an optical fiber. The optical frequencies allocated for the WDM channels are typically arranged in a grid having an equal spacing between two adjacent frequencies. In dense WDM (DWDM), wherein the WDM channels may be closely spaced, the frequency spacing is typically equal to about 100 GHz (corresponding to a wavelength spacing of about 0.8 nm in the near infrared band - roughly between 1 µm to 2 µm) or about 50 GHz (about 0.4 nm in wavelength). Other used WDM channel separations are 200 GHz, 33.3 GHz and 25 GHz. Typically, the set of allocated optical frequencies occupies an optical bandwidth of about 4 THz, which gives room for the use of up to 40 or 41 WDM channels having 100 GHz spacing. The device of the present invention is suitable for a WDM optical bandwidth of at least about 1 THz, preferably at least about 2 THz, typically placed around 1550 nm.

Optical networking is expected to be widely used in perspective optical communication field. The term 'optical network' is commonly referred to an optical system including a plurality of point-to-point or point-to-multipoint (e.g., metro-ring) optical systems optically interconnected through nodes. In all-optical transparent networks few or no conversions of the optical signal into electrical signal, and then again in optical signal, occur along the whole path from a departure location to a destination location. This is accomplished by placing at the nodes of the optical networks electro-optical or optical devices which are apt to process the optical signal in the optical domain, with limited or no need for electrical conversion. Examples of such devices are optical add and/or drop multiplexers (OADM), branching units, optical routers, optical switches, optical regenerators (re-shapers and/or re-timers) and the like. Accordingly, the term 'optical filtering' or 'optical processing', for the purpose of the present description is used to indicate any optical transformation given to an optical radiation, such as extracting a channel or a power portion of said channel from a set of WDM channels ('dropping' or 'tapping' respectively), inserting a channel or a power portion of said channel into a WDM signal ('adding'), routing or switching a channel or its power portion on a dynamically selectable optical route, optical signal reshaping, retiming, phase or dispersion transformation (e.g. compensation) or a combination thereof. In addition, optical systems, and at a greater extent optical networks, make use of optical amplifiers in order to compensate the power losses due to fiber attenuation or to insertion losses of the optical devices along the path, avoiding the use of any conversion of the optical signal into the electrical domain even for long traveling distances and/or many optical devices along the path. In case of DWDM wavelengths, channels are typically optically amplified all together, e.g. within a bandwidth of about 32 nm around 1550 nm.

In optical systems, and at a greater extent in optical networks, a problem exists of filtering one or more optical channels at the nodes while minimizing the loss and/or the distortion of the filtered optical channel(s), as well the loss and/or the distortion of the optical channels transmitted through the node ideally without being processed (hereinafter referred to as 'thru' channels). Advantageously, the optical processing node should be able to simultaneously process more than one channel, each one arbitrarily selectable independently from the other processed channels. Ideally up to all the channels may be simultaneously selectable to be processed, but in practice a number between 2 and 16, preferably between 4 and 8, is considered to be sufficient for the purpose.

It is desirable that the optical processing node is tunable or reconfigurable, i.e., it can change dynamically the subset of channels on which it operates. In order to be suitable to arbitrarily select the channel to be processed within the whole WDM optical bandwidth, the tuning range of the whole optical processing node should be at least equal to said optical bandwidth.

It is also preferred that while the processing node "moves" from an initial channel (A) to a destination channel (B), the channels different from A and B remain ideally unaffected by the tuning operation. In this case the component is defined as 'hitless'. In particular, the channels different from A and B should not be subject to an additional impairment penalty, called 'hit', by the tuning operation. The hit may include a loss penalty and/or an optical distortion such as phase distortion and/or chromatic dispersion.

For example, optical communication networks need provisions for partially altering the traffic at each node by adding and/or dropping one or several independent channels out of the total number. Typically, an OADM node removes from a WDM signal a subset of the transmitted channels (each corresponding to one frequency/wavelength), and adds the same subset with a new information content, said subset being dynamically selectable.

There are several additional concerns. It is in general a problem to tune an optical filter over the whole optical bandwidth, especially when the bandwidth exceeds about 3 THz, for example when it is equal to about 4 THz. For example, notwithstanding the silicon's fairly large thermo-optic effect, scanning the entire telecommunication C-band (32 nm or 4THz) with a single tunable silicon filter, such as a single silicon microring filter, remains quite a difficult task due to the high temperatures reached at the heater layer (up to about 600 °C). The tunable optical processing node should not act as a narrow band filter for the unprocessed channels, since concatenation of such nodes would excessively narrow the channel pass bands. The tunable optical processing node should also be ultra-compact and should have low transmission loss and low cost, since these important factors ultimately determine which technology is selected.

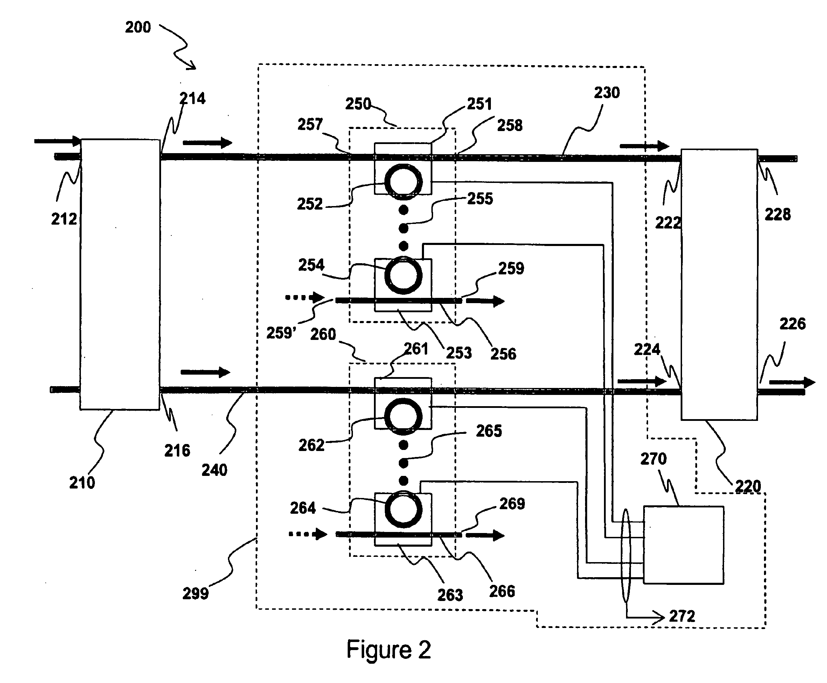

US patent 6,839,482 discloses (see, e.g., Fig. 2 thereof) an optical filter device for separating from a multi-frequency light signal a predetermined frequency component, the device comprising: (i) a first tunable filter structure having a first tuning range and operable to receive an input light signal and output first and second light components thereof through first and second spatially separated light paths, respectively, the first light component having a specific frequency range of the input signal including said predetermined frequency component, and the second light component including a remaining portion of the input light; and (ii) a second tunable filter structure having a second tuning range defining an optical spectrum overlapping with that of the first filter, the second filter being operable to receive the first light component and separate therefrom said predetermined frequency component to propagate to a drop/add light path of the device and direct a remaining portion of the first light component into the first filter structure to be output at the second light path. Patent document WO03/081324 discloses an optical filter having a resonator-system, including two or more resonators, coupled to an input waveguide and an output waveguide.

### Summary of the invention

The Applicant has noted that the filter device described in the cited patent US 6,839,482 is not optimally designed for adding and/or dropping a plurality of independent optical channels. Considering, by way of example, the need of adding and/or dropping two independent channels from a WDM signal, in the cited patent it is suggested to cascade two times the whole structure (e.g. that of Fig 2, bottom, thereof), thus giving rise to several disadvantages. The resulting structure would be complex, both in structure and in operation. Moreover, the cascade of two first tunable filter structures (e.g. ring-resonator pairs R1-R2 and R3-R4 of Fig. 2 of the cited patent) gives rise to a corresponding duplication of the attenuation and the chromatic dispersion introduced by the single first tunable filter structure on the thru channels. The above problems worsen with the increasing of the number of independent channels to be added and/or dropped.

The Applicant has found that there is a need for a method for filtering a WDM optical signal which leaves unaltered, or at least reduces the alteration of, the thru channels during optical filtering operation. Moreover, the optical processing node should preferably leave unaltered the thru channels during tuning, i.e. it should be hitless. In particular, it is desired that the optical processing node introduces no or low chromatic dispersion to the thru channels. In addition, the optical processing node should preferably be low-loss, low-cost, fast tunable and/or broadband.

The Applicant has found a method and a device for tunable optical processing which can solve one or more of the problems stated above. The solution of the present invention is simple, feasible and low cost.

In an aspect of the present invention, a method for filtering an optical signal as set forth in appended claim 1 is provided.

In an aspect, the invention relates to the method of any of claims 1 to 7, wherein said plurality of resonators of the first optical filter and said plurality of resonators of the second optical filter each comprises two and no more than two resonators.

In an aspect, the invention relates to the method of any of claims 1 to 7 or the latter aspect above, wherein said plurality of resonators (252, 254) of the first optical filter (250) is optically coupled in series between a first optical path (230) propagating the first portion and a first waveguide (256) and said plurality of resonators (262, 264) of the second optical filter (260) is optically coupled in series between a second optical path (240) propagating the second portion and a second waveguide (266).

In an aspect, the invention relates to the method of any of claims 8 to 10, wherein in step c) at least one among said each resonance of said at least one resonator of the second optical filter and said respective nearest resonance of said at least another different resonator of the second optical filter is moved outside the frequency region spanning between, and including, the first and the second frequency band.

In an aspect, the invention relates to the method of the latter aspect above, wherein said at least one among said each resonance of said at least one resonator and said respective nearest resonance of said at least another different resonator of the second optical filter belongs to a resonator different from said first resonator (262) of the second optical filter.

In an aspect, the invention relates to the method of any of claims 8 to 10 or any of the two latter aspects above, wherein during step f) at least one among said each resonance of said at least one resonator of the second optical filter and said respective nearest resonance of said at least another different resonator of the second optical filter is moved outside a frequency region spanning between, and including, the first and the second frequency band.

In an aspect, the invention relates to the method of the latter aspect above, wherein said at least one among said each resonance of said at least one resonator of the second optical filter and said respective nearest resonance of said at least another different resonator of the second optical filter belongs to a resonator different from said first resonator (252).

In an aspect, the invention relates to the method of any of claims 1 to 10 or any of the aspects above, wherein said first and/or second separation is greater than or equal to 125 GHz.

In an aspect, the invention relates to the method of any of claims 1 to 10 or any of the aspects above, wherein said first and/or second separation is greater than or equal to 300 GHz.

According to another aspect of the present invention, an optical device as set forth in appended claim 11 is provided. Advantageous embodiments of this method are provided as set forth in appended claims ̶12 to 14.

In an aspect, the invention relates to the device of claim 11 wherein all the resonators of the first optical filter have the same free spectral range.

In an aspect, the invention relates to the device of claim 11 or the latter aspect above wherein all the resonators of the second optical filter have the same respective free spectral range.

In an aspect, the invention relates to the device of any of the two latter aspect above wherein all the resonators of the first and the second optical filter have the same free spectral range.

In an aspect, the invention relates to the device of the latter aspect above wherein the free spectral range of the resonators of the first and second optical filter is substantially equal to an odd multiple of said frequency spacing and greater than half of said optical bandwidth.

In an aspect, the invention relates to the device of the latter aspect above wherein the free spectral range of the resonators of the first and/or second optical filter exceeds the half of the optical bandwidth by more than said frequency spacing.

In an aspect, the invention relates to the device of claim 11 or any of the five latter aspects above wherein the control system is apt to tune at least one resonator of the first optical filter differentially from the remaining resonators.

In an aspect, the invention relates to the device of claim 11 or any of the six latter aspects above wherein the control system is apt to tune the said at least one resonator of the second optical filter differentially from the said at least another different resonator of the second optical filter.

In an aspect, the invention relates to the device of claim 11 or any of the seven latter aspects above wherein said first separation is equal to an even multiple of the frequency spacing.

In an aspect, the invention relates to the device of the latter aspect above, wherein said each resonance of said at least one resonator of the second optical filter falling within said optical bandwidth lies within a distance of half of the frequency spacing from the respective nearest optical frequency of said first sub-grid of optical frequencies.

In an aspect, the invention relates to the device of any of claims 11 to 13 or any of the nine latter aspects above, wherein said control system is configured to perform the further steps of: c) operating the first optical filter (250) so as to obtain a second separation between said respective resonance of at least one resonator of the first optical filter with respect to said respective resonance of at least another different resonator of the first optical filter, said second separation being greater than or equal to 25 GHz: and d) operating the second optical filter (260) so that a respective resonance of each one of said plurality of resonators of the second optical filter falls within a second frequency band, different from the first frequency band, having bandwidth less than or equal to 15 GHz.

In an aspect, the invention relates to the device of the latter aspect above, wherein said control system is further configured to perform, after step b) and before step d), the step of: e) tuning all the resonators of the second optical filter so as to move all respective resonances of the resonators of the second optical filter by a frequency interval greater than said frequency spacing while maintaining a distance between said each resonance of said at least one resonator of the second optical filter with respect to said respective nearest resonance of said at least another different resonator of the second optical filter not less than said first separation.

In an aspect, the invention relates to the device of the latter aspect above, wherein in step e) all the resonators of the second optical filter are tuned substantially in unison so as to equally and contemporarily move all said respective resonances of the resonators of the second optical filter.

In an aspect, the invention relates to the device of claim 11 wherein in step b) at least one among said each resonance of said at least one resonator of the second optical filter and said respective nearest resonance of said at least another different resonator of the second optical filter is moved outside the frequency region spanning between, and including, the first and the second frequency band.

In an aspect, the invention relates to the device of the latter aspect above, wherein said at least one among said each resonance of said at least one resonator and said respective nearest resonance of said at least another different resonator of the second optical filter belongs to a resonator different from said first resonator (262) of the second optical filter.

In an aspect, the invention relates to the device of any of the four latter aspects above, wherein in step e) at least one among said each resonance of said at least one resonator of the second optical filter and said respective nearest resonance of said at least another different resonator of the second optical filter is moved outside the frequency region spanning between, and including, the first and the second frequency band.

In an aspect, the invention relates to the device of the latter aspect above, wherein said at least one among said each resonance of said at least one resonator of the second optical filter and said respective nearest resonance of said at least another different resonator of the second optical filter belongs to a resonator different from said first resonator (252).

In an aspect, the invention relates to the device of any of claims 11 to 13 or any of the sixteen latter aspects above, wherein the first frequency band comprises a first optical frequency belonging to said first sub-grid and the second frequency band comprises a second optical frequency belonging to said second sub-grid.

In an aspect, the invention relates to the device of any of claims 11 to 14 or any of the seventeen latter aspects above, wherein said optical bandwidth is greater than or equal to about 1 THz.

In an aspect, the invention relates to the device of any of claims 11 to 14 or any of the eighteen latter aspects above, wherein the resonators of the first and/or the second optical filter (250, 260) are micro-ring or racetrack resonators.

According to a further aspect of the present invention, an optical communication system comprises a transmitter, a receiver, an optical line optically connecting the transmitter and the receiver and an optical device according to the above and coupled along the optical line, as set forth in appended claim ̶15.

It is believed that the combination of two optical filters, each one apt to interact with two sub-portions of the input WDM optical signal, is suitable for filtering a plurality of independent optical channels while keeping a moderate power and/or dispersion distortion on the thru channels.

### Brief description of the drawings

The features and advantages of the present invention will be made clear by the following detailed description of an embodiment thereof, provided merely by way of non-limitative example, description that will be conducted making reference to the annexed drawings, wherein:
**Figure 1** schematically shows in terms of functional blocks an exemplary optical communication system architecture according to the present invention;
**Figure 2** is a schematic diagram showing in terms of functional blocks a device for tunable optical filtering according to the present invention;
**Figure 3** shows in terms of functional blocks an exemplary configuration of an optical splitter and an optical combiner comprised within the device for tunable optical filtering in an embodiment of the present invention;
**Figure 4** and **5** respectively show the calculated amplitude and dispersion response of the optical splitter comprised in the filtering device of **Figure 3****;**
**Figure 6** shows an exemplary alternative configuration of an optical splitter and an optical combiner comprised within the device for tunable optical filtering of the present invention;
**Figures 7** and **8** respectively show the calculated amplitude and dispersion response of the optical splitter shown in **Figure 6****;**
**Figure 9** shows an exemplary alternative configuration of a tunable optical filter comprised within the device for tunable optical filtering of the present invention;
**Fig. 10** shows the principal steps of a general method for tuning an optical filter in accordance to the present invention.
**Figs.11A****, B** and **C** show the effects in terms of optical power of the method of **Fig. 10****.**
**Figs. 12A****, B** and **C** show the effects in terms of dispersion of the method of **Fig. 10****.**
**Fig. 13A** and **B** shows alternative embodiments of the method for tuning an optical filter in accordance to the present invention.
**Figure 14** shows the effects in terms of optical power of the methods of **Figs. 13A****, B.**
**Fig. 15** shows the principal steps of the method of the present invention.
**Figures 16A** to **16C** are schematic diagrams exemplary showing the operation of the device according to an embodiment of the present invention;
**Figure 17** shows in terms of optical power response the effects of an embodiment of the method of **Fig. 15****.**
**Figures 18A** and **18B** are schematic diagrams exemplary showing the operation of the device according to an embodiment of the present invention;
**Figure 19** shows in terms of functional blocks an exemplary configuration of a device for tunable optical add and/or drop multiplexing according to the present invention;
**Figures 20A** and **20B** respectively show the calculated amplitude and dispersion response of the optical add and/or drop filter comprised in the device shown in **Figure 19****;**
**Figures 21** and **22** respectively show the calculated amplitude and dispersion response of the optical add and/or drop multiplexing device shown in **Figure 19** and comprising the optical splitter and combiner shown in **Figure 4****;**

### Detailed description of the preferred embodiment(s) of the invention

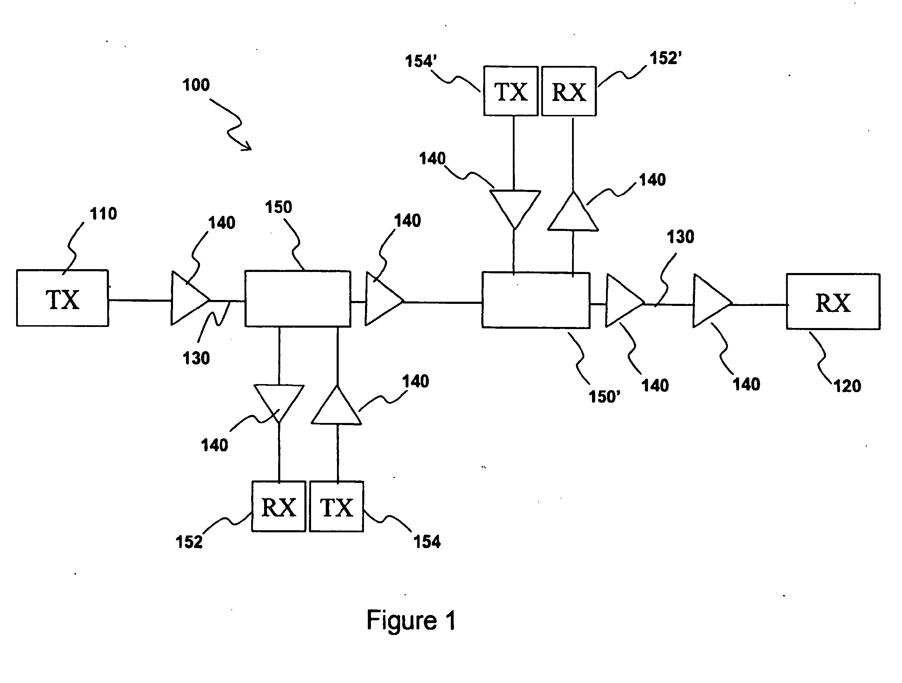

**Figure 1** shows an optical communication system architecture according to a possible embodiment of the present invention.

The optical communication system **100** comprises at least a transmitter **110,** a receiver **120** and an optical line **130** which optically connects the transmitter and the receiver. The transmitter **110** is an opto-electronic device apt to emit an optical signal carrying information. It typically comprises at least an optical source (e.g., a laser) apt to emit an optical radiation and at least a modulator apt to encode information onto the optical radiation. Preferably, the transmitter **110** is a WDM transmitter (e.g., a DWDM transmitter) and the optical signal may comprise a plurality of optical channels (each carrying modulation-encoded information) having respective optical frequencies equally spaced by a given frequency spacing and occupying an optical bandwidth. Preferably, said optical signal lies in the near-infrared wavelength range, e.g. from 900 nm to 1700 nm. Preferably said optical bandwidth is at least 1 THz, more preferably it is at least 2 THz, still more preferably it is at least 3 THz, such as for example equal to about 4 THz (e.g. from about 1530 to about 1560 nm, called C-band). The receiver **120** is a corresponding opto-electronic device apt to receive the optical signal emitted by the transmitter and to decode the carried information. The optical line **130** may be formed by a plurality of sections of optical transmission media, such as for example optical fiber sections, preferably cabled. Between two adjacent sections of optical fiber, an optical or opto-electronic device is typically placed, such as for example a fiber splice or a connector, a jumper, a planar lightguide circuit, a variable optical attenuator or the like.

For adding flexibility to the system **100** and improving system functionality, one or a plurality of optical, electronic or opto-electronic devices may be placed along the line **130.** In **figure 1** a plurality of optical amplifiers **140** are exemplarily shown, which may be line-amplifiers, optical boosters or pre-amplifiers.

According to the present invention, the optical system **100** comprises at least one optical processing node (OPN) **150** optically coupled to the optical line **130** and apt to filter or route or add or drop or regenerate, fully or partially, at least one optical channel of the WDM optical signal propagating through the optical line **130.** The OPN is preferably dynamically tunable or reconfigurable. In the particular case wherein the optical processing node 150 is an optical add and/or drop node **150,** as shown in **Fig. 1****,** i.e., a node adapted to route or switch or add and/or drop, the routed or switched or dropped or added channel(s) may be received or transmitted by further receiver(s) **152** or transmitter(s) **154,** respectively, which may be co-located with the OPN node or at a distance thereof. The optical system or network **100** may advantageously comprise a plurality of optical processing nodes. In **Figure** 1 a further optical processing node **150'** is exemplarily shown, together with its respective optional transmitting and receiving devices **152'** and **154'.**

An optical system **100** having optical add and/or drop nodes **150,** as shown in **Figure 1****,** is commonly referred to as an optical network and it is characterized by having a plurality of possible optical paths for the optical signals propagating through it. As exemplarily shown in **Figure 1****,** a number of six optical paths are in principle possible, which corresponds to all possible choices of the transmitter-receiver pairs in **Figure 1** (excluding the pairs belonging to the same node).

The tunable optical processing node 150 according to the present invention is suitable for independently filtering a plurality of optical channels over the entire WDM band (e.g. the C-band) and/or for filtering a single channel with a reduced tuning range of its constituent parts.

**Figure 2** shows a schematic diagram of an optical device **200** in accordance with an embodiment of the present invention, which may be comprised within the optical processing node **150.**

The design scheme of the optical device **200** comprises an optical splitter **210** with an input port **212** and a first **214** and a second **216** output port and an optical combiner **220** having a first **222** and a second **224** input port and at least one output port **226** or **228.** Throughout the present description, the terms 'input' and 'output' are used with reference to a conventional direction of propagation of the optical radiation (in **Fig. 2** exemplarily from left to right and from top to bottom, as indicated by the thick arrows), but, when in operation, the optical radiation may propagate in the opposite direction. A first optical path **230** and a second optical path **240** optically connect in parallel configuration the optical splitter **210** to the optical combiner **220.** The first optical path **230** connects the first output port of the optical splitter **210** to first input port of the optical combiner **220.** The second optical path **240** connects the second output port of the optical splitter **210** to the second input port of the optical combiner **220.** The two optical paths **230** and **240** are preferably optically separated unless in correspondence of the optical splitter and combiner **210** and **220.**

The optical splitter **210** is a splitting device having, when a broad spectrum optical radiation is inputted in its input port **212,** an optical power response at one of its two output ports periodical with respect to the optical frequency, at least in an optical bandwidth of interest (e.g. 4 THz around 1550 nm or 193 THz). The optical power response of the other of its two output ports is typically the complementary function (1-f) of this optical power response, neglecting the loss introduced by the optical splitter itself. The distance between two successive peaks or maxima within such a periodical optical power response function is referred to as the 'free spectral range' or FSR of the optical splitter and will be generally expressed in optical frequency units. According to the present invention, the optical splitter **210** has a free spectral range corresponding to about the double of the frequency spacing of the allocated WDM frequencies. For example, given a frequency spacing of about 100 GHZ, the FSR is selected to be equal to about 200 GHz.

The 'cross-talk' of the optical splitter **210** at an output port is defined as the optical power level of an optical channel adjacent to a given optical channel corresponding to a peak or maximum of the optical power response at that output port, expressed as relative optical power with respect to the power of the given optical channel. The cross-talk of the optical splitter **210** of the present invention is preferably low, e.g. it may be less than about -10 dB, preferably less than about -15 dB, more preferably less than about -25 dB. Accordingly, and in other words, the optical splitter 210 is apt to receive at its input port **212** a WDM optical signal having a plurality of optical channels allocated on a WDM grid of n optical frequencies equally spaced by a given frequency spacing Δf and occupying an optical bandwidth BW=(*n*-1)Δf, and to output at its first output port **214** a first portion of optical channels, substantially comprising all the channels which are allocated on a first sub-grid (of the WDM grid) of optical frequencies equally spaced by the double of the given frequency spacing (2Δf), and to output at its second output port **216** a second portion of optical channels substantially comprising the remaining channels. Here the term 'substantially' is used to take into account the (typically unavoidable) cross-talk described above. The optical splitter **210** is preferably further selected so as to introduce low loss and/or low distortion (e.g. dispersion) to the split output channels. Assuming the *n* frequencies of the WDM grid being numbered with an index *i* from 1 to *n*, than the first portion of optical channels substantially comprises all the channels having frequencies with a given parity of the index ***i*** (e.g. the 'odd' channels), and the second portion of optical channels substantially comprises the remaining channels having the opposite parity (e.g. the 'even' channels).

The optical combiner **220** is a combining device apt to receive in its two input ports **222** and **224** respective optical radiations propagating along the first and second optical path **230** and **240** and to combine them together so as to output the combined radiation into either one of the two output ports **226** or **228,** possibly with minimum loss and/or distortion. In a preferred configuration, the optical combiner **220** has the same structure of the optical splitter **210,** i.e. the same constituting elements and the same layout, so as to simplify the construction and/or the operation. However, the optical combiner **220** may be set at a working point (i.e. the position of the peaks or resonances) different from the optical splitter **210,** as explained later on.

Preferably, a respective trimming device (not shown) is coupled to the optical splitter **210** and the optical combiner **220** in order to control ('trimming') the working point of the optical splitter and of the combiner, such as for example in order to properly match the peaks of the respective power response with the grid of the WDM frequencies and/or to compensate for possible fabrication errors.

The optical splitter **210** and the optical combiner **220** may be any known device that meets the respective requirements described above. Each of them may be a resonant device, i.e. comprising one or more resonant cavities (or resonators), such as grating assisted couplers, Bragg grating based reflective splitters/combiners, Michelson Gires-Tournois resonator splitters/combiners, microcavity based splitters/combiners, microcavity-loaded Mach-Zehnder interferometer (MZI), or a non-resonant device, such as couplers (e.g. planar waveguide couplers), crystal splitters/combiners, polarization rotator splitters/combiners, MZI based splitters/combiners, or the like. In one embodiment, the resonant optical splitter **210** comprises one or more linear cavities (i.e. cavities each having a plurality of reflectors) or microring resonators or racetrack resonators or photonic band gap cavities or the like.

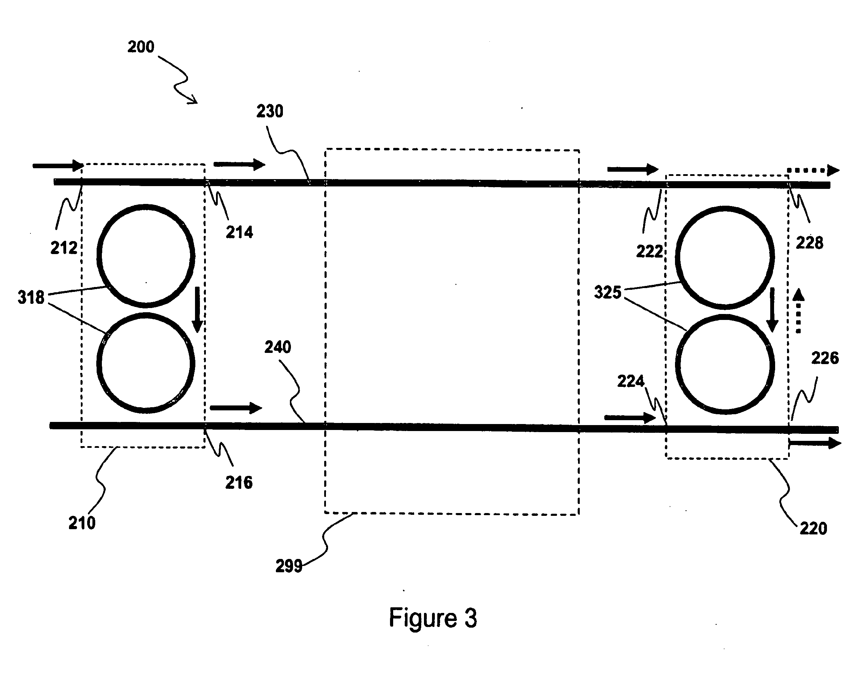

**Fig. 3** shows an exemplary embodiment wherein the resonant optical splitter **210** and/or the resonant optical combiner **220** each comprises one or a plurality of resonators, respectively **318** and **325,** (e.g. microring or racetrack resonators) optically coupled to, and interposed between, two optical waveguides, the latter typically corresponding to the first and the second optical path **230, 240** or being coupled thereto. In case of a plurality of resonators, they may be coupled in parallel between the two optical paths or, preferably, in series as shown in **Fig. 3****.** Preferably the coupled resonators are less than four, more preferably they are two or three. Typically the microring resonators **318** or **325** have the same ring radius so that the free spectral range of a single resonator is the same for all the resonators **318** or **325** and it is also equal to the FSR, as defined above, of the whole optical splitter **210** and/or optical combiner **220.** **Fig. 3** shows the layout of the first and second optical path in case of two or an even number of microring resonators **318** and **325.** Of course, in case the number of resonators **318** or **325** is odd, the physical layout of the first and second optical path may be differently designed so as to take into account the specific behavior of such optical splitter **210** and optical combiner **220.**

When a resonant splitter **210** having an even number of resonators is in operation, the optical channels input into the input port **212** and output into the second output port **216** coupled to the second optical path **240** (i.e. those channels belonging to the second portion, e.g. the even channels) are those channels having optical frequencies which match the resonances of the resonators **318,** and they physically travel across the resonators **318,** as indicated by the down- arrow near microrings **318.**

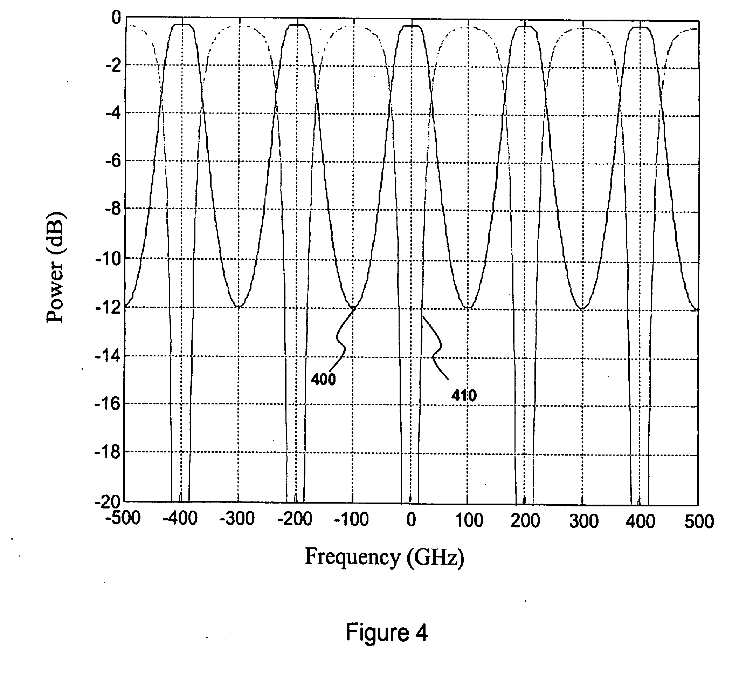

In **Figure 4****,** there are shown the calculated optical power response curves for the first output port **214** (continuous curve **400)** and the second output port **216** (dashed curve **410)** of an exemplary optical splitter of the kind of the optical splitter **210** shown in **Fig. 3****,** which comprises two and no more than two series-coupled microring resonators. Here the zero frequency conventionally corresponds to a frequency of a channel belonging to the second portion, i.e. a channel substantially output at the second output port **216.** A rigorous transfer matrix approach and a 3D Finite Difference Time Domain (FDTD) approach have been respectively used for the calculation of the transfer functions and of the actual dimensional layout of the optical components of the present description. Throughout the present description, the TE polarization mode has been investigated, without restricting the scope of the present invention. In particular, as regard polarization, it is noted that some optical properties of the elements (or of their parts) of the present description, such as, e.g., the resonant optical frequencies, may depend on the specific polarization mode of the optical field propagating therethrough. In the present description, when reference is done to those optical properties, it is assumed a single polarization mode. Preferably the waveguides constituting those elements or their parts are apt to propagate only one polarization (single polarization mode) or they are operated so as to propagate only one polarization (e.g. by exciting only one polarization mode).

Silicon has been selected as the core material of the waveguides constituting both the resonators **318** and **325** and the optical paths **230, 240** of **Fig. 3****.** Preferably, the purity of silicon as the core material is higher than 90% in weight, more preferably higher than 99%. The doping level of the silicon core material is preferably below 10¹⁵ defects/cm³. The choice of silicon is due to its high thermo-optic effect which enables a large tuning range of the optical structures thus fabricated. Silica may be used as a cladding material surrounding the silicon waveguide core, e.g. in a buried or channel or ridge waveguide configuration. Alternatively other kind of materials could be used as cladding such as: polymers, spin on glass i.e. HSQ, Si3N4, etc. The high index contrast waveguide obtained through the above material systems allows fabricating microring resonators with very small radius and negligible bending losses. Silicon waveguides height may suitably be in the range of 100-300 nm and their thickness in the range of 200-600 nm. In the example described in **Fig. 4****,** Silicon waveguide cross section is about 500 nm wide and 220 nm high. A SiO₂ top cladding with a refractive index (at a wavelength of 1550 nm and at a temperature of 25°C) of n_{clad} = 1.446 has been included in the design. Silicon refractive index has been taken equal to 3.476 (wavelength of 1550 nm and temperature of 25°C).

In calculating the optical responses, it has been assumed a realistic value for the total loss of the substantially straight (i.e. with negligible bending radiation losses) silicon waveguides (e.g. **230, 240**) and of the microring (i.e. including the bending radiation loss) waveguide **318** of respectively 3 dB/cm and 10 dB/cm. The present invention equally applies in case of different values of losses. The calculated effective and group indexes of the Si waveguide were respectively in the range of about 2.43- 2.48 and 4.21- 4.26. The ring radius of the resonators **318** is 55(±1%) µm which corresponds to an FSR of about 200 GHz. The ring to bus and ring to ring power coupling coefficients are respectively 74%(±5%) and 44%(±5%), which may be exemplarily obtained by a ring to bus gap equal to 120 nm and a ring to ring gap equal to 140 nm.

It is noted that the cross-talk at the second output port is better (smaller) than the cross-talk at the first one. The in-band ripple is less than about 0.2 dB and the insertion loss less than about 1 dB.

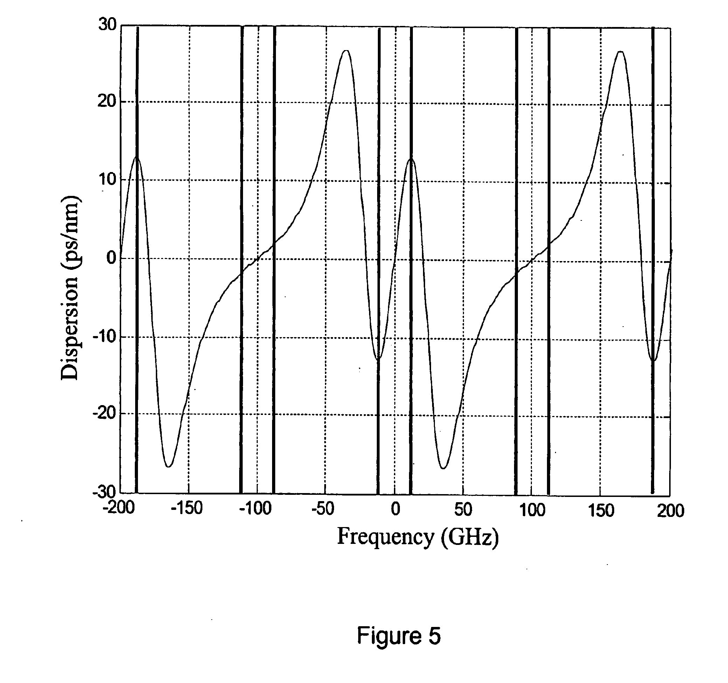

In **Figure 5****,** it is shown the corresponding dispersion response curve of the exemplary optical splitter **210** described with reference to **Fig. 3** and **4****.** Both the first and the second output port **214, 216** exhibit the same dispersion curve shown in **Fig. 5****.** Here the zero frequency is the same of **Fig 4** described above. The channels at zero and ± 200 GHz are channels in resonance with the microrings **318** and they have crossed the resonators **318,** while those at ±100 GHz are non resonant channels which remain on the optical path **230.** It can be seen that the dispersion introduced by the exemplary optical splitter **210** on the resonant channels (within the channel bandwidth of ± 12.5 GHz around the central frequency of each channel) remains below 20 ps/nm, which is an acceptable limit even thought not negligible. On the other hand, the non-resonant channels are affected by a negligible dispersion. There is consequently an asymmetry between the channels that are non-resonant and the ones which are resonant with resonators **318,** the latter being disadvantaged in terms of losses, polarization dependent loss and dispersion.

A maximum value of ± 20 ps/nm of the dispersion added to the thru channels (by the whole optical device 200) is usually specified, while a more relaxed specification (i.e. ± 80 ps/nm) is generally required for the dropped channel(s). This is because the dropped channel is usually immediately detected while the thru channels may travel through several OPN nodes **150** before being detected so that dispersion accumulation has to be avoided.

In the exemplary embodiment of **Fig. 3****,** the optical combiner **220** is structurally identical to the optical splitter **210** so that a resonant recombination takes place at the combiner **220** with minimum loss.

In one embodiment, in operation the combiner **220** may be also tuned, or trimmed, at the same working point of the optical splitter **210,** i.e. with its resonances substantially overlapping those of the optical splitter **210.** In this case, the non-resonant channels belonging to the first portion will propagate along the first optical path **230** and will pass thru the optical combiner **220** and will be output into the output port **228** corresponding to the first optical path. The resonant channels belonging to the second portion first cross the resonators **318** of the splitter **210** and then are input at the input port **224** of the combiner and, being resonant with its microrings **325,** they travel across the latter and are output at the same output port **228.** This is illustrated in **Fig. 3** by the dashed arrows. Thus the acquired dispersion of the resonant channels (see **Fig. 5**) would sum up twice, thus reaching the maximum acceptable level, while non-resonant channels are substantially unaffected. The thru output (at the output port **228**) would be consequently strongly not equalized and would be difficult to meet the specification of the filter especially in term of dispersion.

In a preferred alternative embodiment, in operation the combiner **220** is trimmed by the respective trimming device so that its resonances are detuned in frequency by one half of its FSR (e.g., 100 GHz detuning for a 200 GHz FSR) with respect to the resonances of the optical splitter **210.** In other words, if, e.g., the optical splitter **210** is operated so as to deviate toward the optical path **240** the even channels, the optical combiner **220** is operated so as to deviate the odd channels from the optical path **230** toward the optical path **240** and vice versa. In still other words, if the optical splitter **210** resonates at, e.g., the even channels, the optical combiner **220** is made to resonate, by the trimming device, at the odd channels. Accordingly, the non-resonant (with respect to the combiner **220**) channels propagating along the second optical path **240** will not leave the optical path **240** and will be output into the output port **226** corresponding to the second optical path **240.** The resonant (with respect to the combiner **220**) channels in the first optical path **230** will propagate crosswise the resonators **325** of the combiner **220** and will be also output into the same output port **226,** as indicated by the solid arrows in **Figs. 2** and **3****.** Advantages of this particular configuration is that every single channel will propagate crosswise only either the optical splitter's resonator(s) or the optical combiner's resonator(s), thus having the result of an output WDM signal at the output port **226** with more homogeneous channels than in the alternative configuration above, both in optical power (loss, PDL, etc.) and in optical distortion, such as phase distortion and/or dispersion.

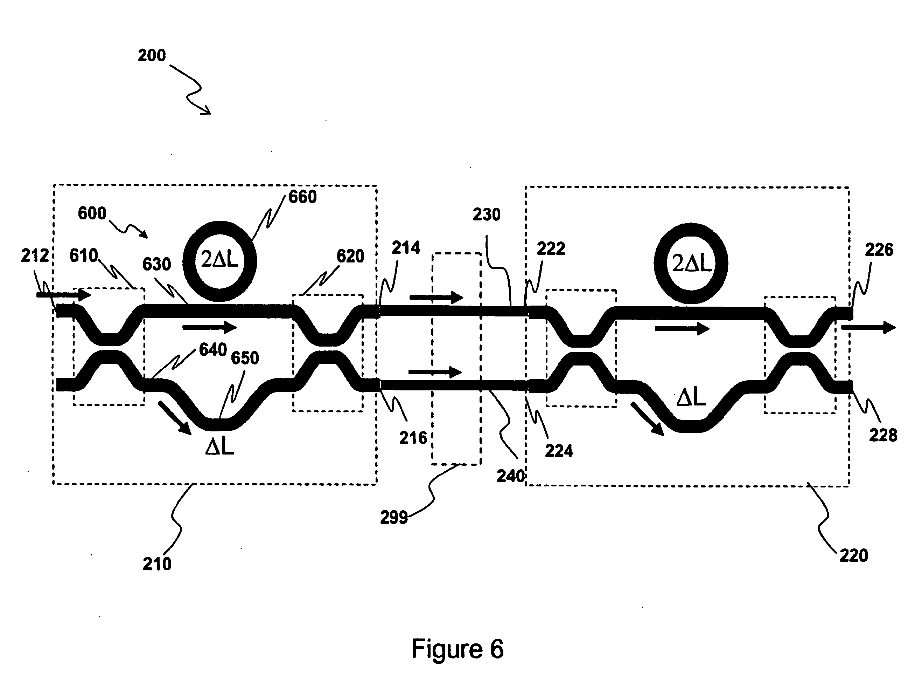

**Fig. 6** shows an alternative possible configuration of the resonant optical splitter **210** and/or of the optical combiner **220,** such configuration comprising a resonator-loaded MZI **600,** i.e. a Mach-Zehnder Interferometer **600** having an all-pass filter **660** optically coupled to an arm **630** of said MZI and wherein the free spectral range of the all-pass filter **660** is equal to said frequency spacing.

In **Figure 6** like reference numerals have been used for like elements with respect to **Figs. 2** and **3****.** The resonator-loaded MZI may be any resonator-loaded MZI known in the art. Exemplarily, it may comprise a first **610** and a second **620** 3-dB optical splitter, a first **630** and a second **640** optical arm optically connecting in parallel configuration the first and the second optical splitter, wherein the second optical arm comprises an extra-length (ΔL) **650,** or a corresponding phase shifting device, with respect to the first optical arm **630,** and wherein a resonator **660** (exemplarily a microring) is optically coupled to the first optical arm. Equivalently, any resonant cavity (linear, racetrack, etc) may be used as resonator **660.** The resonator **660** is adapted to act as an all-pass filter with respect to the optical radiation propagating along the arm **630.** The length of the resonant cavity **660** is equal to about 2 ΔL, so that the corresponding FSR of the resonant cavity **660** is approximately equal to the WDM frequency spacing. Preferably the first and second optical splitter **610** and **620** are broadband 3-dB optical splitter, at least as broad as the WDM optical bandwidth. For example, they may be MZI-based 3-dB planar couplers, as known in the art, or adiabatic 3-dB couplers as described, e.g., in Y. Shani et al., IEEE J. of Quantum Electronics, Vol. 27, N° 3, March 1991, pp. 556-566. Advantageously, the optical combiner **220** may have the same structure as shown in **Fig. 6****.** In this case, the optical combiner **220** may be oriented in the same way as the optical splitter **210** (as shown in figure) or it may be oriented in a point-symmetric configuration with respect to the optical splitter **210** (e.g., in **Fig. 6** the respective ring may be coupled to the bottom waveguide and the extra-length to the top waveguide).

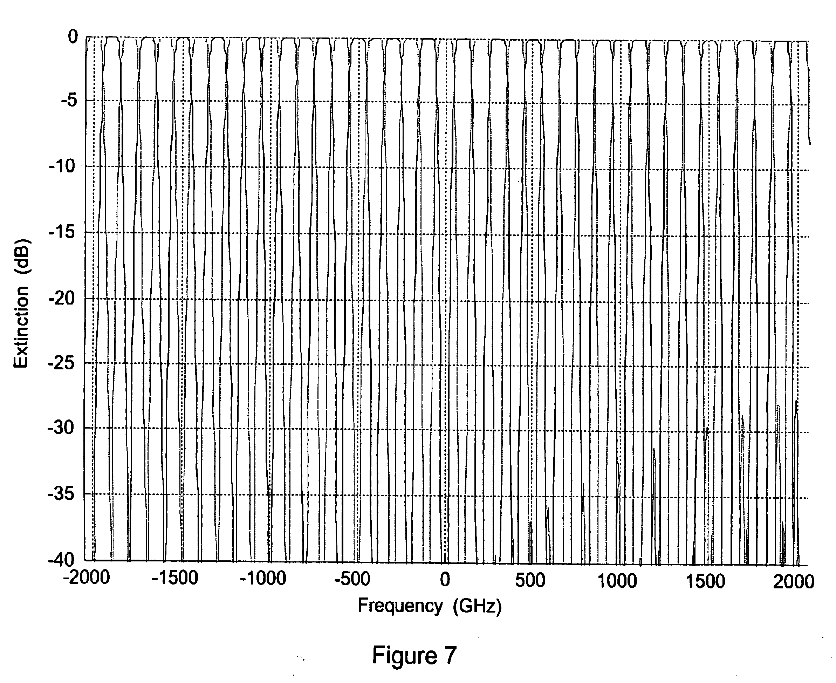

In **Figure 7****,** there are shown the calculated optical power response curves for the first output port **214** (continuous curve) and the second output port **216** (dashed curve) of an exemplary optical splitter **210** comprising a resonator-loaded MZI **600** of the kind shown in **Fig. 6****.** Silica-buried silicon waveguides have been used both for the resonator **660** and the waveguides **630, 640.** The ring radius of the resonator **660** is 113 µm which corresponds to an FSR of the single resonator 660 of 100 GHz. The ring to bus coefficient is 87% (suitable range 82%-92%), which may be obtained with a gap of about 120 nm. The cross section of the rectangular waveguides was 490 nm wide and 220 nm high. The zero frequency in **Fig. 7** corresponds to a wavelength equal to 1544 nm. The insertion loss for all the channels ranges from 0.1 to 0.5 dB, the ripple remains below 0.1 dB and the cross talk within the channel bandwidth remains below (better than) about -25 dB for ideal 50-50 couplers **610, 620,** below about -20 dB for 48-52 couplers and below -15 dB for 45-55 couplers. All the design parameters not expressly cited in this section (such as propagation losses of the straight and bent (microring) waveguides, effective and group indexes, etc.) have been assumed equal to those used for **Figs. 4** and **5****.**

It is noted that the cross-talk of the ring-loaded MZI **600** is better than that of the exemplary series-coupled resonators splitter **210** of **Fig. 3** and that the power response is symmetric with respect to the first and the second portions of channels.

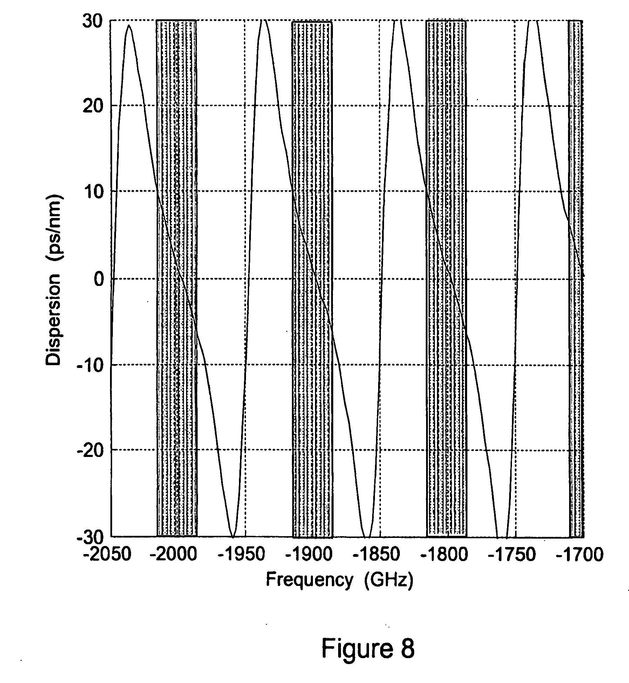

In **Figure 8****,** it is shown the dispersion response curve of the exemplary optical splitter **210** described with reference to **Fig. 6** and **7****.** Both the first and the second output port **214, 216** exhibit the same dispersion curve shown in **Fig. 8****.** Here the frequency scale corresponds to the one used for **Fig 7****.** It can be seen that the dispersion introduced by the exemplary optical splitter **210** of **Fig. 6** remains on all the channels (within the channel bandwidth of ± 12.5 GHz around the central frequency of each channel) below about 10 ps/nm and well below 20 ps/nm and that there is a symmetric dispersion response with respect to the first and the second portions of channels.

Referring now back to **Fig. 2****,** according to the present invention a first optical filter **250** is optically coupled to the first optical path **230** and it is adapted to receive at least a portion of the optical radiation propagating through the first optical path **230** via an input port **257** and to output a transformed optical radiation via an output port **258** according to optical transfer functions (such as phase and power transfer functions). The optical filter **250** may be any optical device apt to give an optical transformation to the optical radiation propagating along the first optical path **230,** being its optical transfer functions wavelength-dependent in the wavelength band of interest. In the present description, any physical quantity which substantially changes within the WDM optical wavelength band of interest (e.g. 30 nm around 1550 nm) is referred to as being 'wavelength-dependent'.

According to the present invention the optical filter **250** is a resonant optical filter comprising a plurality of resonant cavities (or resonators) **252, 254, 255,** such as Bragg gratings or microcavities such as linear cavities, microrings, racetracks, photonic band gap cavities and the like. In a preferred configuration, the resonant optical filter **250** comprises microring or racetrack resonators. The plurality of resonators comprises a first optical resonator **252** optically coupled adjacently to the first optical path **230** and one or more further resonators **254, 255** coupled in series to said first resonator **252.** In the drawings, the symbol **255, 265** consisting in three dots vertically aligned represents an arbitrary number, including zero, of resonators. Preferably the series-coupled resonators comprised within the optical filter **250** are less than or equal to four, more preferably they are two or three.

In general, a single resonant optical cavity has associated 'resonant wavelengths' (and corresponding 'resonant frequencies'), defined as those wavelengths which fit an integer number of times on the cavity length of the resonant optical cavity. The integer number defines the order of the resonance. For example a Bragg grating comprises a plurality of coupled resonant cavities. The distance between two adjacent resonant frequencies/wavelengths is referred to as the free spectral range (FSR) of the single resonator.

The transfer functions (e.g. phase, dispersion or power) of the above resonant optical filter 250 are typically characterized by strong wavelength dependence at and in the proximity of a resonant wavelength of one or more of its individual resonators, depending on the distribution of the resonances of the constituting individual resonators and on their reciprocal position in the frequency domain. The above perturbations of the overall power transfer function are typically equally spaced in frequency and the distance between two adjacent perturbations of the optical filter **250** is referred to as the (overall) 'free spectral range' of the resonant optical filter **250.** In the advantageous case wherein all the resonators comprised within the optical filter have the same FSR and their resonances are all aligned, the FSR of the optical filter coincides with the FSR of the single resonators and the overall resonances of the optical filter coincides with the resonances of the (aligned) resonators.

In one configuration, the overall FSR of the optical filter **250** is greater than the WDM optical bandwidth. In an alternative preferred configuration, the free spectral range of the first tunable resonant filter **250** is smaller than the WDM optical bandwidth, and it is substantially equal to an odd multiple of the WDM frequency spacing and greater than half of the WDM optical bandwidth. In other words, the FSR of the optical filter **250** is given by: FSR= (2k+1)Δf±X% Δf, being Δf the frequency spacing and k any positive integer such that k> (BW-2 Δf)/4 Δf, being BW the optical bandwidth, or, equivalently, k> (N_{ch}-3)/4, being N_{ch} the number of allocated WDM channels. It is noted that N_{ch}=BW/Δf+1. The term 'substantially' used above takes into account the ±X% Δf term, wherein X is less than or equal to 50 or, preferably, less than or equal to 40 or, more preferably, less than or equal to 25. The value of ±50% Δf may be suitable for a 10 Gbit/s NRZ or RZ channel bit-rate having 100GHz or 50GHz spacing. However this value may depend on transmission parameters such as the channel bit-rate and the frequency spacing and it is ultimately determined by the maximum allowable dispersion and/or loss on the thru channels. For a 40 Gbit/s NRZ or RZ channel bit-rate, a smaller value may be suitable, for example equal to ±25% Δf. For example, for a bandwidth equal to about BW= 4000 GHz and a frequency spacing equal to Δf=100 GHz (41 channels), than FSR= (2k+1)100±40 GHz, with k≥10, e.g. FSR= 2100±40 GHz, preferably FSR=2100±20 GHZ.

In a preferred embodiment the optical filter **250** is an optical add and/or drop filter (OADF) wherein the two or more resonators **252, 254, 255** are optically coupled in series between the first optical path **230** and a 'drop' waveguide **256.** A further optical port **259** ('drop port'), belonging to the drop waveguide has the function of dropping, fully or partially, at least an optical channel within the optical band of interest propagating in the operating path **230.** In other words, the power transfer function at the drop port **259** is typically characterized by high transmission peaks equally spaced in frequency by a quantity equal to the overall FSR of the optical filter. In a preferred embodiment, the OADF **250** has a still further optical port **259'** ('add port') which is apt to receive an optical radiation (dashed arrow) to be added to the thru optical signal. It is noted that in the absence of this drop waveguide, the optical filter **250** may act as an all-pass filter.

According to the present invention, the optical filter **250** is a tunable optical filter, i.e. it is apt to select an arbitrary optical channel to be filtered. This functionality may be accomplished with any technique known in the art, such as for example exploiting the thermo-optic, the electro-optic, the magneto-optic or the acousto-optic effect. In particular, at least one resonator comprised within the optical filter **250** is individually tunable differentially with respect to at least another resonator of the remaining resonators of the optical filter **250,** i.e. it may be tuned with a certain degree of freedom from the tuning of the at least another resonator.

A control system **270, 272, 251, 253** is operatively connected to the resonators of the optical filter **250** so as to be able to selectively tune them in accordance to the present invention.

For example, the control system may comprise a control device **270** operatively coupled, by way for example of connecting lines **272,** to at least two actuators **251, 253,** which in turn are operatively coupled to the plurality of resonators of the optical filter **250.** The control device **270** typically includes a processor (e.g. a microprocessor) configured for implementing the methods of tunable filtering in accordance with the present invention. The control system may also include drivers (not shown) suitable to drive the actuators **251** and **253.**

In one exemplary embodiment, as the one shown in **Fig. 2****,** each individual resonator may be tuned, within a tuning range, substantially independently from the remaining resonators, by way for example of a respective actuator dedicated to each individual resonator and individually driven by the control device **270.** The dedicated actuator is configured for strongly interacting with the respective associated individual resonator while interacting weakly with the remaining resonators. For example, as shown in **Fig. 2****,** in case the tuning operation relies on the thermo-optic technique (particularly advantageous in case of silicon waveguides) a heater **251, 253** may be thermally coupled to (e.g. placed in proximity of) each individual resonator **252, 254** respectively, so that it is suitable to heat substantially only the respective associated resonator (and possibly the straight bus waveguide **230** or **256** which the associated resonator may be coupled to) while being thermically isolated from the others.

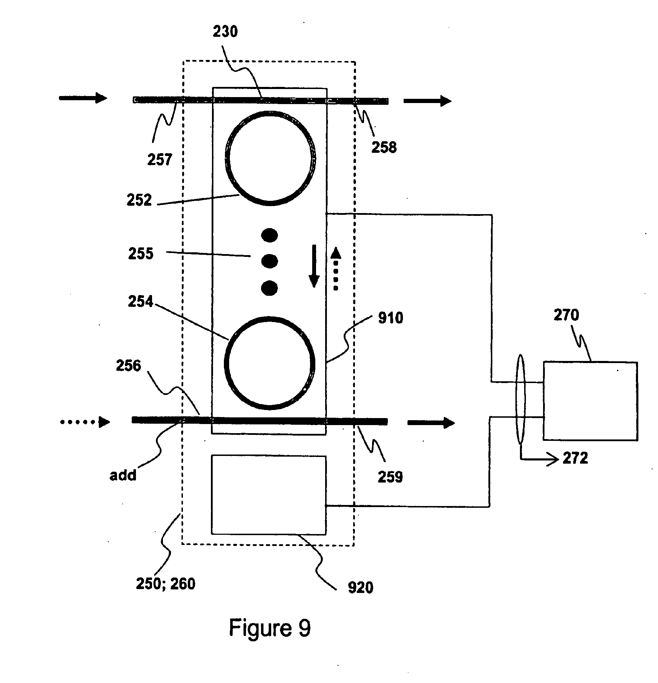

**Fig. 9** shows an alternative configuration of the optical filter **250** or **260.** For the sake of clarity, it is assumed that the actuators are thermo-optic actuators (i.e. micro-heaters), but the present configuration equally applies to other tuning techniques. A massive tuning heater **910** is configured for heating substantially uniformly all the resonators **252, 254** and **255** comprised within the optical filter **250.** In addition, a trimming heater 920 is configured for selectively heating one or a plurality of resonators, but in any case it is configured for interacting not uniformly with the totality of the resonators in the optical filter **250.** For example, the heater **920** may be placed in proximity (on the side or on top) of a single resonator **254** so as to interact with this one single resonator more strongly than with the remaining resonators. In this way a differential temperature is generated which allows differential tuning of the resonators.

In accordance to the present invention, a second tunable optical filter **260** is optically coupled to the second optical path **240** as shown in **Fig. 2****.** The optical filter **260** is advantageously a resonant optical filter having optical filtering and tuning functionality similar to those of the first optical filter **250.** In one configuration, the overall FSR of the optical filter **260** is greater than the WDM optical bandwidth. In an alternative preferred configuration, the free spectral range of the second tunable resonant filter **260** is smaller than the WDM optical bandwidth, and it is substantially equal to an odd multiple of the WDM frequency spacing and greater than half of the WDM optical bandwidth (FSR= (2k+1)Δf±% Δf, k> (BW-2 Δf)/4 Δf, or equivalently, k>(N_{ch}-3)/4 and X≤50 or X≤40).

Preferably, the FSR of at least one of the first and second optical filter **250, 260** exceeds the half of the optical bandwidth by a quantity greater than the frequency spacing. In other words, k is selected such that k> BW/4Δf or equivalently k> (N_{ch}-1)/4. According to the Applicant, the optimal choice for k is (N_{ch}-1)/4+1> k> (N_{ch}-1)/4. Reasons for these selections will be given below. For example, for a bandwidth equal to about BW= 4000 GHz and a frequency spacing equal to Δf=100 GHz (41 channels), than FSR= (2k+1)100±40 GHz, with preferably k≥11. According to the Applicant, the optimal choice for k is k=11, i.e. FSR= 2300±40 GHz.

For reasons of easy manufacturing and operation, it could be preferable that the FSR of the second tunable optical filter **260** has the same characteristics of the FSR of the first tunable filter **250.** Preferably, the second optical filter has the same structure of the first optical filter **250,** i.e. the same type and number of resonators, as well as the same layout of the resonators and actuators arrangement. Accordingly, in a preferred configuration both the first and the second optical filter have the respective FSR exceeding the half of the optical bandwidth by a quantity greater than the frequency spacing.

The preferred configuration of the optical device **200** allows the FSR of the first and second optical filter **250, 260** being advantageously smaller than said optical bandwidth, i.e. k<(BW- Δf)/2Δf, or equivalently k<(N_{ch}-2)/2. More preferably, k is selected so that k<(3BW-4Δf)/BΔf, or equivalently k<(3N_{ch}-8)/8. In the example above, advantageously, k≤18, and, more advantageously, k≤13.

Another advantage of the combination of the optical splitter and combiner **210, 220** above and the first and second optical filter **250, 260** is that it relaxes the requirements of the optical filters in terms of roll-off because the optical filters receive portions of the WDM signal having a coarser grid (e.g. 200 GHz instead of 100 GHz). This allows for example the use of a drop filter having two-ring stages, as described below, instead of filters having three- or four-ring stages, which exhibit much more fabrication and operation challenges.

The combination of the first and second optical filter **250** and **260** is comprised in a filtering cell **299,** e.g. a drop cell **299** having output ports **259** and **269.** The device **200** of the present invention is particularly suitable to filter a plurality of arbitrary optical channels independently chosen in the WDM grid, by way of suitably cascading a corresponding plurality of filtering cells **299** along the direction of propagation of the optical radiation in the optical paths **230** and **240.** Each filtering cell **299** is apt to filter one channel arbitrarily selected within the whole WDM grid and independently from the channels filtered by the other cells **299.** The cascade of filtering cells **299** is comprised, with respect to said direction of propagation, between the optical splitters **210** and the optical combiner **220** without the need of cascading the latter elements as much times as the number of channels to be dropped. The advantage of this solution is that the thru channels propagate across the splitter **210** and the combiner **220** only once (and in the particularly preferred configuration described above only either one of the splitter **210** and the combiner **220**), thus seeing limited overall dispersion by the device **200.** In the comparative case wherein the whole structure comprising the splitter **210,** the cell **299** and the combiner **220** of **Fig. 2** is cascades more than once, the dispersion acquired by the thru channels in the splitter **210** and the combiner **220** sums up and may reach the maximum specification.

The optical components described in the present description, such as the optical splitter **210** of **Fig. 3** or **Fig. 6** and the optical filter **250** or **260** of **Fig. 2** or **Fig. 9****,** may be fabricated by any fabrication process known in the field of integrated optics, e.g. a layering process on a substrate, such as an SOI wafer having a thickness of the buried oxide in the range of 3-10 microns and a thickness of the top Si in the range of 50-1000 nm. The layering process may include the e-beam lithography and etching steps. A SiO₂ layer could be deposited as a top cladding.

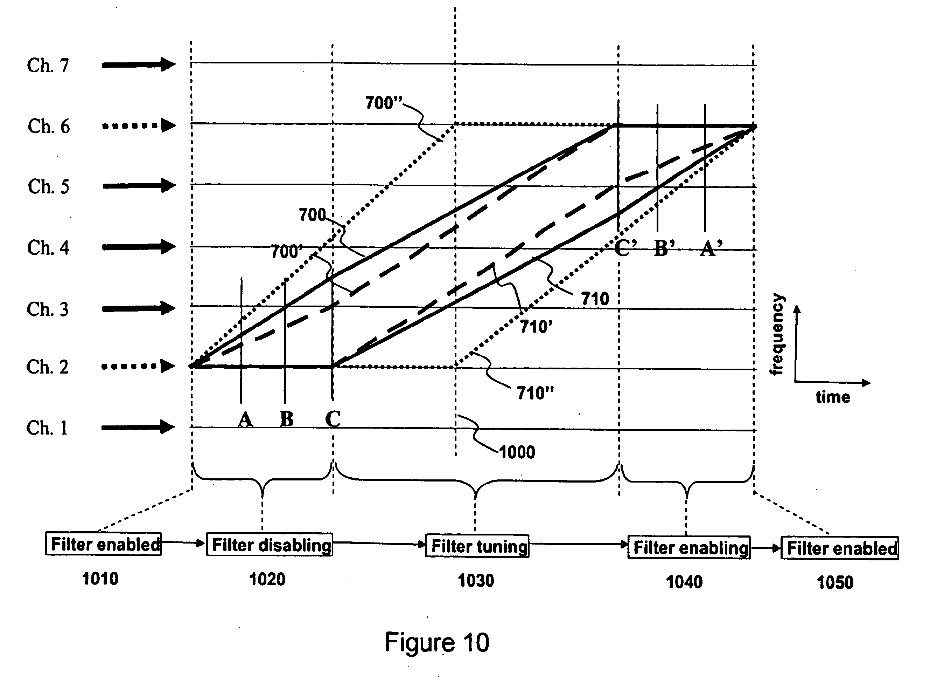

Now, the general principle of operation for tuning an optical filter **250** (of the kind shown e.g. in **Figs. 2** and **9**) comprising a plurality of series-coupled resonators in accordance with the present invention will be illustrated with reference to **Fig. 10****,** wherein the horizontal and vertical axis represent respectively time and optical frequency scale. Figures from **Fig. 10** to **Fig. 14** show the case of an optical filter comprising two and no more than two series-coupled resonator. It is understood that the teaching of the present invention equally applies to optical filters comprising three or more series-coupled resonators.

For the sake of illustration it is assumed that the filter is tuned from an initially filtered optical channel (exemplary channel 2 represented by a dashed arrow) to a finally filtered optical channel (exemplary channel 6), passing over the intermediate thru channels (in the example channels 3, 4 and 5 represented by solid arrows). It is also assumed that the final channel has optical frequency ('final frequency') higher than that of the initial channel ('initial frequency'), even though the skilled reader would easily understand the more general case. Typically initially and finally filtered channels are switched off during tuning operation or they are let switched on but not used for communication purpose.

In an initial state **1010** the filter **250** is 'enabled' which means that a respective optical resonance of each one of the plurality of resonators falls within a given frequency band, typically comprising the center optical frequency allocated for a given WDM channel (exemplarily the initial channel 2), said frequency band having a bandwidth sufficiently narrow to enable the filter, independently from the single resonator bandwidth, to operate properly on the given channel (i.e. with suitable shape of the filter spectral responses as known in the art). Typically, the bandwidth is less than 15 GHz, preferably less than 10 GHz, and more preferably less than 5 GHz. In the present description and claims, when reference is done to a position (in the frequency spectrum) or to a distance of a resonance with respect to another one, reference is done to the peak of the resonance(s) taken into consideration.

This initial state may be achieved by properly tuning one or more (e.g. all) of the individual resonators. In the present description, the expression 'tuning an individual resonator' means moving the resonances of the resonator in the frequency spectrum, e.g. actuating the resonator by exploiting a physical effect. Typically, the ensemble of resonances of an individual resonator moves substantially rigidly (i.e. maintaining unchanged the resonance distribution and spacing) while the resonator is being tuned.

The resonances defined above are hereinafter called 'initial resonances of interest' and their number equates the number of resonators within the filter. It is noted that typically a single resonator has a plurality of resonances characterized by their order and distributed along the frequency spectrum, typically with constant periodicity. The present invention equally holds independently by the specific order of the initial resonance of interest of each resonator. For practical reasons, it is preferable that all the above initial resonances of interest of the resonators belong to the same order. In case all the individual resonators are structurally identical (equal FSR) and thermo-optically actuated, this may be achieved, e.g., by setting all the resonators at substantially the same mean temperature ('mean temperature' is the temperature averaged along the whole length of the ring). In addition, it is noted that it is not strictly necessary that all the resonators within the plurality of resonators have the same FSR. In the preferred case of the resonators having the same FSR, the condition of step **1010** implies that each resonance of any resonator is aligned, within 15 GHz, with a respective resonance of any of the other resonators.

In step **1020** the filter is subject to 'disabling', wherein the overall filtering function of the filter is spoiled by introducing a certain separation between each resonance of at least one of the plurality of the resonators falling within the optical band of interest (WDM optical bandwidth) and the respective resonance of at least another different resonator which is the resonance nearest (in the wavelength or frequency domain) to respectively said each resonance, the separation being greater than or equal to 25 GHz (see discussion below). In **Fig. 10** solid curve **700** represents the trajectory (in the time-frequency plane) of the initial resonance of interest of, e.g., said at least one resonator while solid curve 710 represents the trajectory of the initial resonance of interest of said at least another different resonator. In the example of **Fig. 10****,** only one resonance (i.e. the initial resonance of interest) of the at least one resonator falls within the WDM band and the nearest resonance of the at least another different resonator is the initial resonance of interest of the at least another resonator. In the example of **Fig. 10****,** during disabling only the resonator 700 is tuned while resonator **710** is kept fixed. Curves **700'** and **710'** show a possible alternative to, respectively, curve **700** and **710** and curve **700"** and **710"** show another possible alternative to, respectively, curve **700** and **710.** Disabling of the filter continues at least until a separation equal to 25 GHz between the two resonances is reached. However, the maximum separation reached by the two resonances during the disabling step or in the entire procedure of **Fig. 10** may be, and typically is, higher. In **Fig. 10** the maximum separation corresponding to curves **700** and **710** is exemplarily one and half times the WDM channel spacing, while the one corresponding to curves **700', 710'** and **700", 710"** is respectively one and four times the channel spacing.

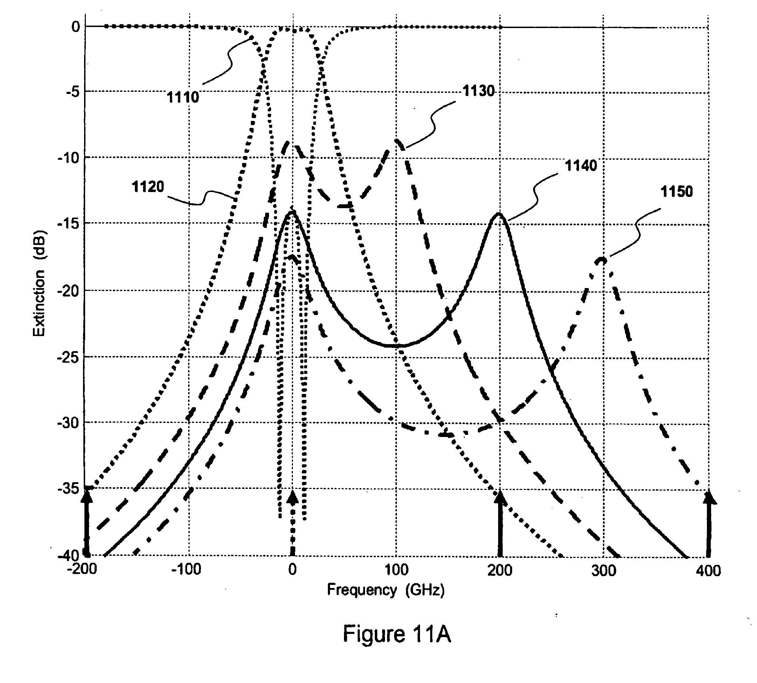

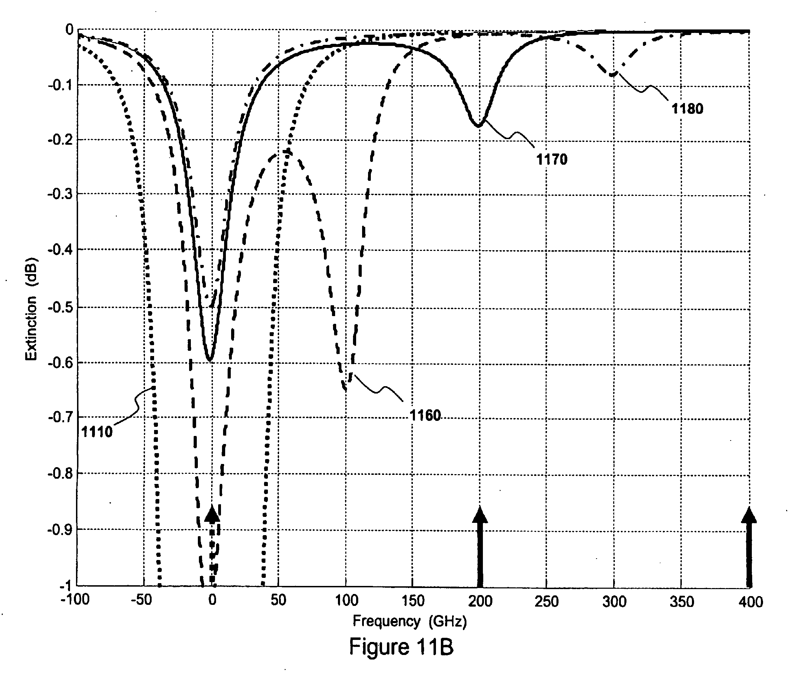

In order to illustrate the effects of step 1020, reference is done to **Figs. 11A** and **11B** which show thru (at port **258**) and drop (at port **259**) power responses of an optical drop filter **250** (or **260**) of the kind shown in **Fig. 2** or **Fig. 9** and comprising two and no more than two microring resonators **252, 254** series-coupled between the two bus-waveguides **230, 256.** The microrings have the same ring radius equal to about 5 (±1%) µm and thus the same corresponding FSR equal to about 2300± 20 GHz. Silicon is used as core material for the waveguides constituting the optical filter **250.** The reason behind the Silicon choice is its large thermo-optic effect which allows for a microring resonance tuning of at least 16 nm, preferably equal to about 32 nm, with a relatively moderate range of the heater temperature, i.e. below 400 °C. Silicon waveguide cross section (both straight bus and microring) is about 488 nm wide and 220 nm high. The width of the section of the waveguide in proximity of the microring narrows down to 400 nm wide. In calculating the optical responses, it has been assumed a realistic value for the total loss of both the substantially straight silicon waveguides (e.g. **230, 240**) and of the microring waveguides **252, 254** of the order of 3 dB/cm (comparable results are obtained in a range from 2 to 5 dB/cm). In case of different values of microring losses, a proper choice of the bus-to-ring coupling coefficients may allow achieving the desired results in terms of hit losses. The ring to bus and ring to ring power coupling coefficients are respectively 8.5%(±10%) and 0.24%(±10%), which may be exemplarily obtained by a ring to bus gap equal to 132±10 nm and a ring to ring gap equal to 260±20 nm. Regarding the remaining design parameters, the same values described above with reference to figures from 3 to 8 have been set.

Curve 1110 (dotted) in **Fig. 11A** and **11B** represents the thru power response (at thru port **258**) when the optical filter is in the state according to step **1010** above, i.e. 'enabled' and tuned on a given channel (the initial channel), illustrated by the dashed arrow at conventionally zero frequency. In particular, the two respective initial resonances of interest of the two microring resonators are tuned so as to be substantially aligned, i.e. to fall within a frequency band centered on the initial channel and having bandwidth less than or equal to 10 GHz. Curve **1120** (dotted) in **Fig. 11A** represents the drop power response (at drop port **259)** corresponding to the thru response **1110.** The solid arrows represent the channels neighboring the initial channel, with an exemplary spacing of 200 GHz.

Curves **1130** (dashed), **1140** (continuous) and **1150** (dash-dotted) represent the drop response at three instants (e.g. states **A, B** and **C** with regard to curves **700** and **710** in **Fig. 10****)** of an exemplary realization of step 1020, wherein the separation between the respective optical resonances of the first and second resonator is respectively 100 GHz, 200 GHz and 300 GHz. Curves **1160** (dashed), **1170** (continuous) and **1180** (dash-dotted) in **Fig. 11B** represent the thru response corresponding to the drop responses **1130, 1140** and 1150 respectively.

**Figs. 11A** and **11B** show how the overall resonance and filtering function of the optical filter **250** is spoiled by mutually separating the initial resonances of interest of the first and second resonator (filter 'disabling'). In particular, the disablement shown in **Figs. 11A** and **11B** is obtained by leaving the resonance of the resonator coupled closest to the first optical path **230** (i.e. the input-to-thru waveguide) unperturbed, i.e. in correspondence to the initial channel, and by tuning only the resonator coupled closest to the drop waveguide **256** so as to move its respective resonance away from the resonance of the other resonator.

Once the filter is disabled, i.e. the separation is greater than 25 GHz (see discussion below), it is adapted to be preferably massively tuned (optional step **1030**) over the WDM band without affecting or weakly affecting the WDM channels 'crossed' by any resonance of any individual resonator of the optical filter. The expression 'massive tuning' means that all the resonances of the resonators are moved in the frequency domain by a respective frequency interval greater than the WDM frequency spacing, while maintaining a distance between the resonances separated according to the above greater than or equal to the separation achieved during the disabling step (which in turn is greater than or equal to 50 GHz). Preferably, during massive tuning all the resonators of the filter are tuned substantially in unison (uniformly and contemporarily), i.e. the overall response functions of the optical filter rigidly move in the frequency domain. Exemplarily, in **Fig. 10** and curves **700** and **710,** the massive tuning is performed 'rigidly' and it ends when the resonance of one of the individual resonators is in the proximity of the central allocated WDM frequency of the final channel.

The effect of the disablement during massive tuning is derivable from **Fig. 11B****:** the maximum power loss hit at 100 GHz, 200 GHz and 300 GHz resonance separations is respectively about 1 dB, 0.6 dB and 0.5 dB on the thru channels (channels 3, 4 and 5 of **Fig. 10**) 'crossed' by the resonance of interest of the ring coupled closest to the input-to-thru waveguide 230 while being tuned (assuming ring propagation loss of about 3 dB/cm). Such resonance of interest in **Fig. 11B** is represented at zero frequency. It's worth to note that the drop response (**Fig. 11A**) is not particularly significant during massive tuning, since typically during massive tuning operations the output from the drop port is neglected.

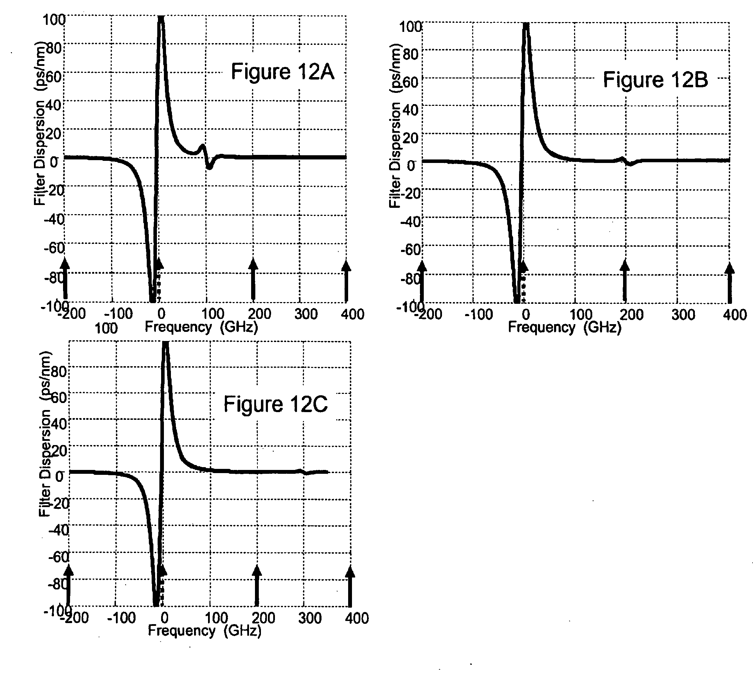

**Figs. 12A, 12B** and **12C** show the thru dispersion response (at thru port **258**) corresponding respectively to the thru power responses **1160, 1170** and **1180** of **Fig. 11B** (and corresponding respectively to a resonance separation of about 100 GHz, 200 GHz and 300 GHz).

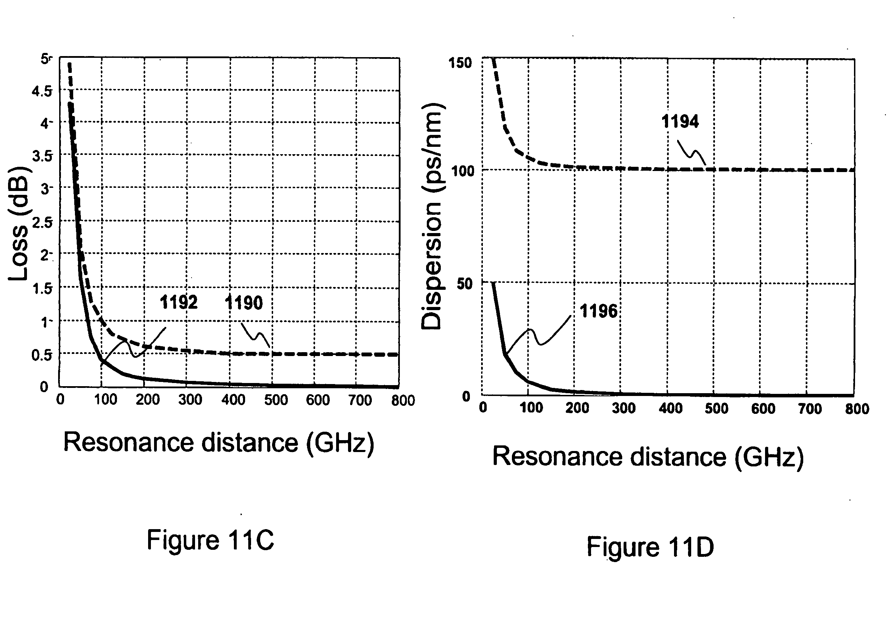

**Fig. 11C** shows on the horizontal axis the mutual distance (in absolute value) between the closest resonances of a two-ring optical filter and on the vertical axis the corresponding power loss at a thru optical frequency overlapping the resonance of either the ring closest to the input-to-thru waveguide (dashed curve **1190**) or the ring adjacently coupled to the previous ring (continuous curve **1192**)**.** In case of a drop filter, the latter ring is the one adjacently coupled to the drop waveguide (e.g. waveguide **256** of **Fig. 2** and **Fig. 9**).

**Fig. 11D** correspondingly shows on the horizontal axis the mutual distance (in absolute value) between the closest resonances of a two-ring optical filter and on the vertical axis the corresponding dispersion hit at a thru optical frequency overlapping the resonance of either the ring closest to the input-to-thru waveguide (dashed curve **1194**) or the ring adjacently coupled to the previous ring (continuous curve **1196**)**.**

The following **table 1** shows the corresponding numerical values, wherein the second column corresponds to curve **1190,** the third one to curve **1194,** the fourth column to the curve **1192** and the last column to curve **1196.**

**Table 1**

| Separation | Loss ring #1 | Disp ring #1 | Loss ring #2 | Disp ring #2 |
|---|---|---|---|---|
| (GHz) | (dB) | (ps/nm) | (dB) | (ps/nm) |
| 25 | 4.9 | 150 | 4.3 | 50 |
| 50 | 2.1 | 118 | 1.6 | 18 |
| 75 | 1.3 | 108 | 0.75 | 10.5 |
| 100 | 1 | 105 | 0.4 | 6 |
| 125 | 0.8 | 103 | 0.3 | 4 |
| 150 | 0.72 | 102 | 0.2 | 2.5 |
| 175 | 0.66 | 101.5 | 0.15 | 2 |
| 200 | 0.61 | 101.2 | 0.12 | 1.5 |
| 300 | 0.55 | 100.5 | 0.06 | 0.65 |
| 400 | 0.51 | 100 | 0.035 | 0.4 |
| 500 | 0.5 | 100 | 0.02 | 0.26 |
| 600 | 0.5 | 100 | 0.015 | 0.2 |
| 800 | 0.5 | 100 | 0.01 | 0.15 |

In general, **Table 1,** **Figs. 11C** and **11D** show that when the microring resonances are mutually separated by an amount greater than 25 GHz (i.e. greater than 0.2 nm) the extra loss and the extra dispersion (which are both mainly given by the ring adjacently coupled to the input-to-thru waveguide) on any channel during massive tuning of the filter are lower than or equal to respectively about 5 dB and about 150 ps/nm. Preferably, the separation between the two resonances is greater than or equal to 50 GHz, so as to obtain a loss and dispersion hit less than respectively 3 dB and 150 ps/nm. The above values of the loss and dispersion hit depend on the structure, materials and parameters exemplarily used above.

The technical specifications which according to the Applicant are preferable for a hit-less tunable OADM filter, are simultaneously the following:
1. the extra loss (loss hit) suffered by any of the thru channels during filter massive tuning less than or equal to the loss uniformity requirement, i.e. less than or equal to about 0.5 dB.
2. the extra dispersion (dispersion hit in absolute value) induced on the thru channels during filter massive tuning lower than about 150 ps/nm (preferably 100 ps/nm).

It is noted that although the specification on the maximum extra dispersion of the thru channels for a generic tunable OADM is commonly +/- 20ps/nm (being that it may be possible to cascade up to 16 OADMS in a telecommunication link while maintaining the accumulated dispersion below about 320 ps/nm), nevertheless during the transient time of the tuning procedure (i.e. over some tenths of milliseconds) an extra dispersion up to 100-150 ps/nm can be tolerated without significantly affecting the transmission performances.

The Applicant has found that when the detuning is less than about 125 GHz (1 nm), the maximum loss at a frequency matching the resonance of the ring adjacently coupled to the input-to-thru waveguide is greater than about 0.8 dB and the dispersion larger than about 105 ps/nm. The Applicant has also found that it is possible to mitigate such large hits by increasing the mutual resonance distance, as becomes now clear from **Table 1** and **Figs. 11C** and **11D****.** Accordingly, the Applicant has found that it is preferable to maintain the relative distance between the respective resonances of a first and a second resonator within the optical filter of the invention during massive tuning of the filter at a value greater than or equal to 125 GHz, so as to obtain a maximum loss on the thru channels less than or equal to 0.8 dB. More preferably, such resonance distance is greater than or equal to 150 GHz, in order to mitigate the hit at a value less than or equal to 0.7 dB. Even more preferably, the resonance distance is greater than or equal to 200 GHz, corresponding to a hit no more than 0.6 dB. Further more preferably, when the separation is greater than or equal to 300 GHz (2.4 nm in the near infrared band), the extra loss on thru channels during massive tuning of the filter is lower than or equal to about 0.5 dB and the extra dispersion equal to about 100 ps/nm.

In addition to the above, the Applicant has found that while increasing the mutual distance of the resonances using the thermo-optic effect, a trade-off exists between the consequent decrease of power and dispersion hit and the increase of the thermal cross talk. In fact, the difference in the resonance position results in a difference in the thermal state of the at least two rings of interest, i.e. a difference in the ring mean temperature. For a given resonance separation, a corresponding difference of the ring mean temperatures exists, which depends on the structure and material of the rings. For example, for a two-ring silicon filter as described in the present description, a resonance separation of about 800 GHz and 400 GHz corresponds to a difference in the ring mean temperature of respectively about 80 °C and about 40 °C, roughly speaking. In turn, for a given difference in the ring mean temperature a corresponding thermal cross-talk exists, i.e. a certain amount of thermal energy flows from the hotter ring to the cooler one and/or from the heater heating the respective ring to the other (unwanted) ring. Again, the thermal cross-talk will depend on the choice of materials and structures of the rings and their coupling region, on the thermal isolation among the two rings and on the structure, layout and thermal coupling of the respective heaters. In general, for a given target difference in the ring mean temperature, the higher is the thermal cross-talk, the higher is the difference in the heat radiated by the two heaters dedicated respectively to the two rings and consequently the higher is their power consumption. Since typically the higher is the difference in the heat radiated by the two heaters the higher is also the difference in the temperatures of the two heaters, this results also in a higher thermal wear and tear.

Accordingly, the Applicant has found that it is advantageous to keep the resonance separation less than or equal to about 800 GHz, more preferably less than or equal to about 600 GHz, even more preferably less than or equal to about 500 GHz. These maximum values are consistent with the fact that, as now clear from **Table 1,** **Fig. 11C** and **11D****,** the loss and dispersion hits asymptotically tend to fixed values (exemplarily about 0.5 dB loss and 100 ps/nm dispersion hits).

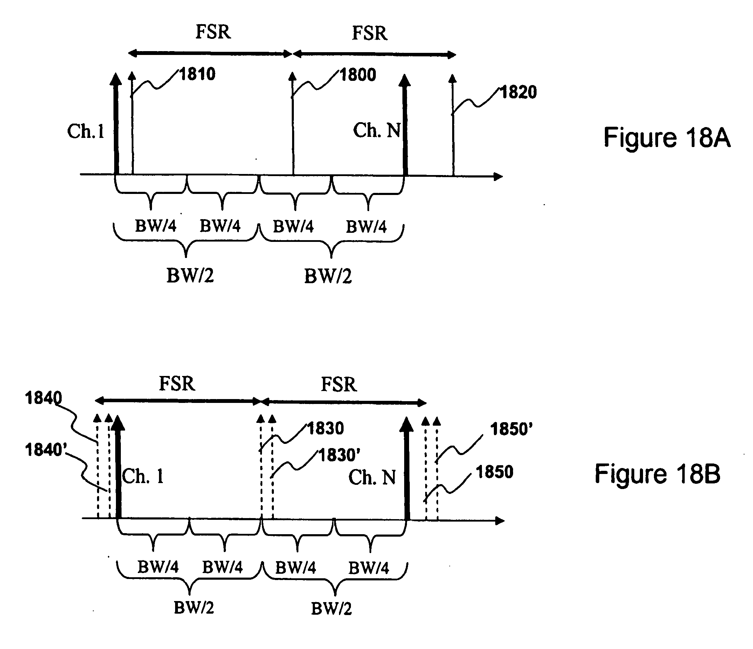

Referring now back to **Fig. 10****,** in step **1040** the filter is enabled again, so that, once enabled (state **1050**), a respective optical resonance of each one of the plurality of resonators falls within a frequency band, having the bandwidth described above for the initial frequency band and typically comprising the center optical frequency allocated for the final WDM channel (exemplarily channel 6). The resonances defined above are hereinafter called 'final resonances of interest' and their number equates the initial resonances of interest. While in **Fig. 10** the initial and final channels are filtered by way of the same resonances of the two rings translated in frequency (i.e. the final resonances of interest have the same order of the initial resonances of interest), in another embodiment the order of the final resonances of interest, at least of one or more of the plurality of resonators, may be different from that of the initial resonances of interest. An example of this is shown below with reference to **Fig. 18A****.**

The 'enabling' step **1040** may be performed by replicating back the same steps followed for filter disabling **1020** with the role of the two rings of interest mutually exchanged, as shown in **Fig. 10****.** With reference to **Fig. 10****,** exemplarily the resonance of said at least one resonator (curve **700** or **700'** or **700"**) is maintained at the target frequency while the resonance of said at least another different resonator (curve **710** or **710'B** or **710"**) is moved toward the target frequency, so as to pass through states **C', B'** and **A'** respectively corresponding to states **C, B** and **A.**

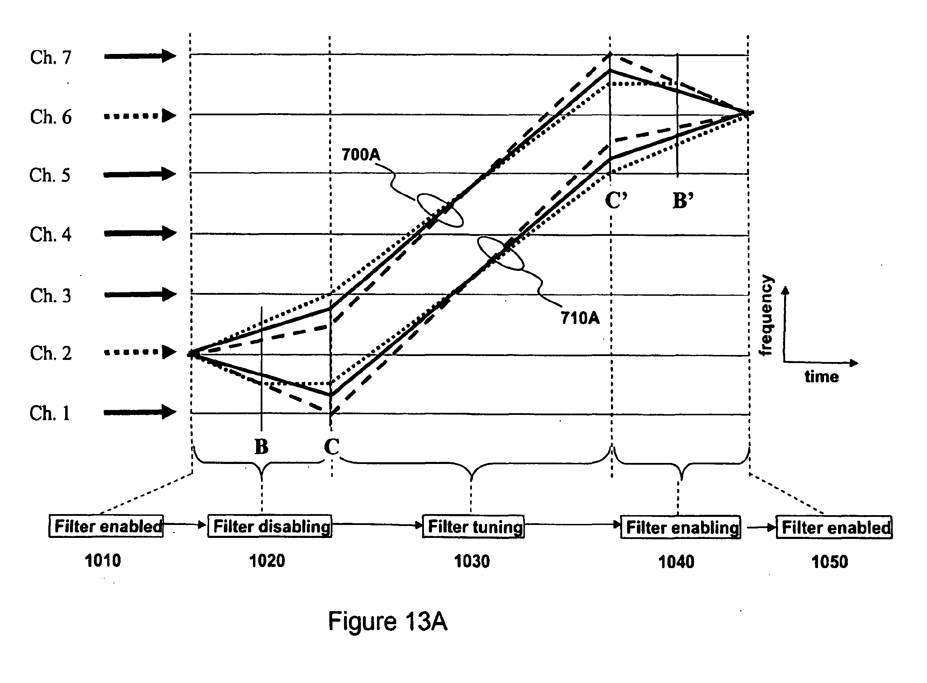

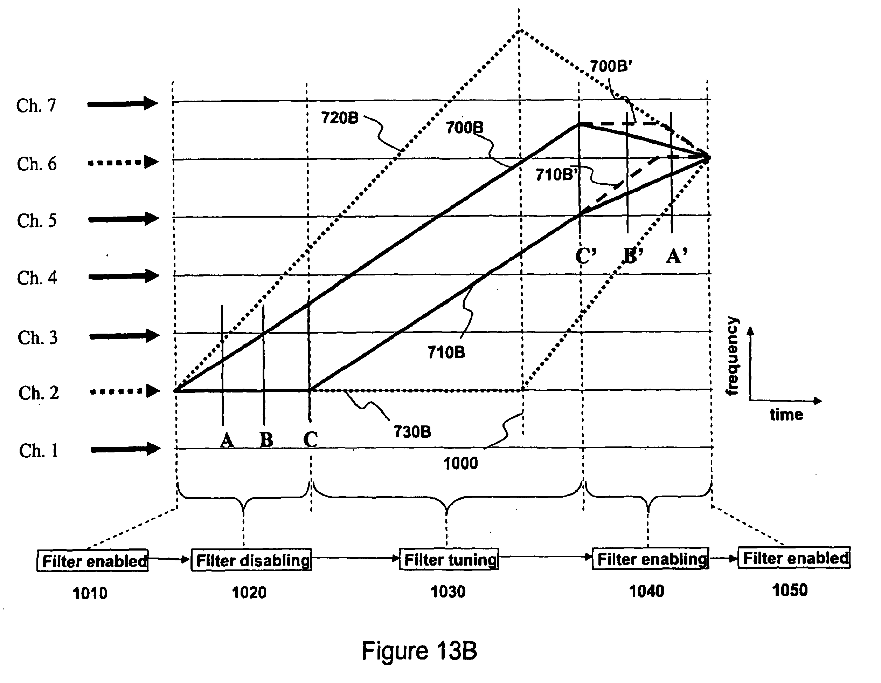

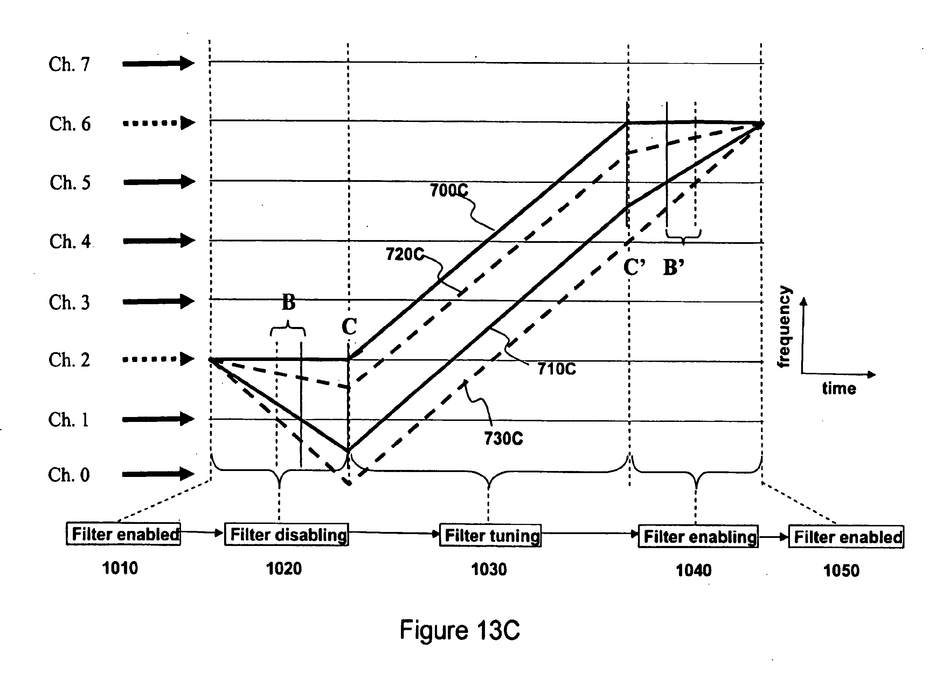

The specific starting and ending points of the dynamic steps **1020, 1030** and **1040** shown in **Fig. 10** (and the following **Figs. 13**) are purely conventional and for illustrative purpose only. This is particularly true when determining the boundaries between filter disabling and filter tuning and between filter tuning and filter enabling. Conventionally, the ending point of the disabling step (which coincides with the starting point of the tuning step) may be taken at the instant when the separation between the resonances of interest reaches a given predetermined value, which in any case needs to be not less than 25 GHz. Similarly, the starting point of the enabling step may be taken at the instant when the separation between the resonances of interest goes below a further given predetermined value, which may be equal to the predetermined value above or different, but in any case not less than 25 GHz. Exemplarily, in **Fig. 10** the end of disablement and the start of enablement both are conventionally taken at one and half times the WDM channel spacing for curves **700** and **710,** while for curves **700', 710'** and **700", 710"** they respectively are at one and (roughly) two times the channel spacing. However, the position in time of the end and start points above changes while changing the above predetermined value(s). For example, in correspondence to dotted lines **700"** and **710",** if the predetermined value is taken equal to the maximum separation of the resonances (four times the spacing), then the disabling step may be considered ending at the maximum separation (vertical dashed line 1000), which may also be considered as the starting point of the successive enabling step 1040, thus making the 'tuning' step **1030** to collapse and eventually vanish. Dashed line 1000 may be conventionally taken as the separation point between enabling and disabling steps also for curves **700, 710** and **700', 710'.** In this sense the massive tuning step **1030** may be considered optional.

In the example shown in **Fig. 10** the resonance of interest of both the at least one resonator (curve **700**) and the at least another resonator (curve **710**) 'hits' successively the thru channel numbered 3, 4, and 5, for a total number of six hits. It is noted that not all the six hits shown in **Fig. 10** are equal in magnitude, especially with regard to optical power. In fact, as now clear from **Figs. 11A****, B, C** and **D** which refer to a two-ring filter, for a given relative distance between the resonances of interest of the two resonators, the biggest power and dispersion hit occurs when the frequency of a thru channel equates the resonance of the resonator coupled closest (adjacently) to the input-to-thru waveguide (curve **1190** and **1194** of **Fig. 11C** and **11D**)**.** In addition, the power hits occurring at point **B** and **B'** for curves **700** and **710** of **Fig. 10** are different from those occurring during the massive tuning step **1030,** since the relative distance between the resonances is smaller in points **B** and **B'** (e.g. one channel spacing) than during massive tuning (e.g. 1.5 times the channel spacing). Again the hit is worse in state **B** or in state **B'** depending on curve **700** representing respectively the resonator coupled closest to the input-to-thru waveguide (waveguide **230**) or the other resonator. In general, as long as the maximum reached resonance separation is greater than the channel spacing (curves **700'** and **710'** illustrate the border case), the worst hit during the entire procedure of **Fig. 10** is either **B** or **B',** i.e. during the enabling or, respectively, disabling step. For example, assuming a channel spacing equal to 100 GHz and assuming that curve **700** represents the ring series-coupled to the ring adjacently coupled to the input-to-thru waveguide, then the power hit on channel 3 in the state **B** is equal to about 0.4 dB (see **Table 1** and **Fig. 11C**) and the subsequent hits on channel 4 and 5 is equal to about 0.2 dB. As regard to curve 710 (ring closest to the input-to-thru waveguide) the hits during massive tuning on channel 3 and 4 is equal to about 0.7 dB, while the hit in the state B' on channel 5 is about 1.1 dB.

Based on the discussion above, the Applicant has found that it is advantageous to avoid that any resonance of any resonator hits a thru channel when the relative distance of such resonance with respect to the respective closest resonance of any other resonator is less than the maximum resonance separation set for filter tuning (in **Fig. 10** the hits to be avoided correspond to state **B and B'** for curve **700** and **710** and the hits on channel 3 and channel 5 of curve **700'** and **710'**). In particular, the latter sentence is true in case the maximum resonance separation is less than or equal to two times the channel spacing. In case the maximum resonance separation is larger than two times the channel spacing, the Applicant has found a solution that avoids any hit in correspondence to a resonance distance smaller than two times the channel spacing.

Moreover, the Applicant has found that it is particularly advantageous to avoid that any resonance of the resonator coupled closest to the input-to-thru waveguide hits a thru channel when the relative distance of such resonance with respect to the closest resonance of any other resonator is equal to or less than the channel spacing.

The Applicant has found a possible solution to the problem above, the various embodiments of which are shown in **Figs. 13A to C**, wherein the same reference signs of **Fig. 10** have been used for the same features, where applicable, and the same exemplary assumptions made for **Fig. 10** are used. In general, the solution envisages that during enabling and/or during disabling step, at least one among the initial resonances of interest (and/or respectively the final resonances of interest) is moved in the frequency spectrum outside the region of the frequency spectrum comprised between the initial channel and the final channel ('resonance overshooting'). Preferably, said at least one initial and/or final resonance of interest belongs to a resonator different from the one coupled closest to the input-to-thru waveguide.

**Fig. 13A** shows a possible embodiment of the tuning technique in accordance to the present invention. The reference sign **700A** refers to three possible alternative trajectories (dotted, solid and dashed curves) of the resonance of interest of one of the two resonators and the reference sign **710A** refers to three possible alternative trajectories of the resonance of interest of the other of the two resonators. In particular, dotted lines show an exemplary variant of the pattern. Independently from the symbol used (respectively dotted, solid and dashed), any combination obtained by a choice of one out of the three curves **700A** and one out of the three curves **710A** is suitable to the invention. A choice in accordance with the same symbol (respectively dotted, solid and dashed) gives an exemplary maximum resonance separation (during massive tuning) equal to 1.5 times the channel spacing. The main difference with respect to the method described with reference to **Fig. 10** is that now during the step **1020** of filter disabling and the step **1040** of filter enabling, one of the two resonators is tuned so that the respective relevant resonance moves in the frequency spectrum staying on opposite sides with respect to, respectively, the initial frequency and the final one. As a consequence, any hit before the maximum resonance separation is reached (e.g. any hit during the enabling and the disabling steps) can be avoided, as long as the maximum resonance distance does not exceed the value of twice the channel frequency spacing. In **Fig. 13A** the hits occur solely during massive tuning step, in a total number of six in correspondence to the dotted and solid curves, which increases up to eight hits (hitting also channel 1 and 7) choosing both the dashed curves. Moreover, in case the maximum separation does exceed the double of the frequency spacing, the present solution allows avoiding any hit in correspondence to a resonance separation less than twice the frequency spacing. Due to the point symmetrical configuration of the patterns shown in **Fig 13A****,** the overall power hit of the entire procedure is not affected by the choice of which one of the two rings (the one coupled closest to the input-to-thru waveguide or the other) corresponds to curve **700A** or **710A.** In particular, the resonator whose resonance of interest overshoots during disabling of the filter is different from the resonator whose resonance of interest overshoots during enabling of the filter.

**Fig. 13B** shows an alternative embodiment of the tuning technique in accordance to an embodiment of the present invention. While the disabling step is similar to that described in **Fig. 10****,** the enabling step is now performed in accordance to the technique shown in **Fig. 13A****.** Due to the asymmetry of the pattern of **Fig. 13B****,** it is important which ring corresponds to which curve. In accordance to a preferred embodiment, it is a ring different from the one closest to the input-to-thru waveguide which 'overshoots' with respect to the strict tuning range which starts from the initial frequency and ends at the final one. Curve 700B corresponds to the ring different from the one closest to the input-to-thru waveguide while curve **710B** corresponds to the ring closest to the input-to-thru waveguide: Curves **700B'** and **710B'** show possible alternative paths of the resonance curves **700B** and **710B,** respectively. Curves **720B** and **730B** show further possible alternative paths of the resonance curves, respectively, wherein the massive filter tuning step **1030** may be conventionally assumed as shown in figure or it may be considered absent. The patterns used for the enabling and disabling steps may be mutually exchanged provided that care is taken to mutually exchange also the roles of the two rings. The main difference with respect to **Fig. 13A** is that now a hit is tolerated at a resonance separation less than two times the channel spacing (exemplarily equal to the channel spacing during filter disabling), provided that care is taken that this hit is caused by a ring distal with respect to the input-to-thru waveguide. For example, assuming a channel spacing equal to 100 GHz, the power hit due to the ring distal from the input-to-thru waveguide is equal to about 0.4 dB on channel 3 (state **B** of **Fig. 13B** -see **Fig. 11C**) and about 0.2 dB on channel 4 and 5. As regard to curve **710B** (assumed to represent the ring closest to the input-to-thru waveguide) the hit during massive tuning on channel 3, 4 and 5 is equal to about 0.7 dB, including the hit in the state **C'** on channel 5. It is noted that the enabling step (i.e. bringing near the two resonances) may start from the instant at which the ring coupled closest to the input-to-thru waveguide crosses the channel adjacent the final one on. An advantage of the present embodiment is that the maximum frequency tuning range spanned by both the rings is lower than those shown in Fig. **13A** (respectively 4.5 times the channel spacing - for the distal ring - and from 5 to 6 times).

**Fig. 13C** shows two further alternative embodiments of the tuning technique in accordance to the above. Curves **700C** and **720C** refer to the resonator closest to the input-to-thru waveguide and curves **710C** and **730C,** respectively, are the corresponding trajectories associated to the other resonator. Also in this case the patterns are asymmetric, with the same implications described above with reference to **Fig. 13B****.** The main difference is that now, while the resonance of the distal resonator overshoots (exemplarily in the disabling step), the proximal resonator may remain unperturbed (curve **700C)** or it may slightly 'overshoot' in the same direction of the distal resonator (curve **720C).** Again, the pattern allows that the hit in state **B** and **B'** is caused by the distal ring and it is thus mitigated.

It is noted that in all embodiments of **Figs. 13A-C**, either during enabling or during disabling the resonance of the ring distal from the input-to-thru waveguide is preferably moved in the opposite direction with respect to that needed for going from the initial frequency to the final one.

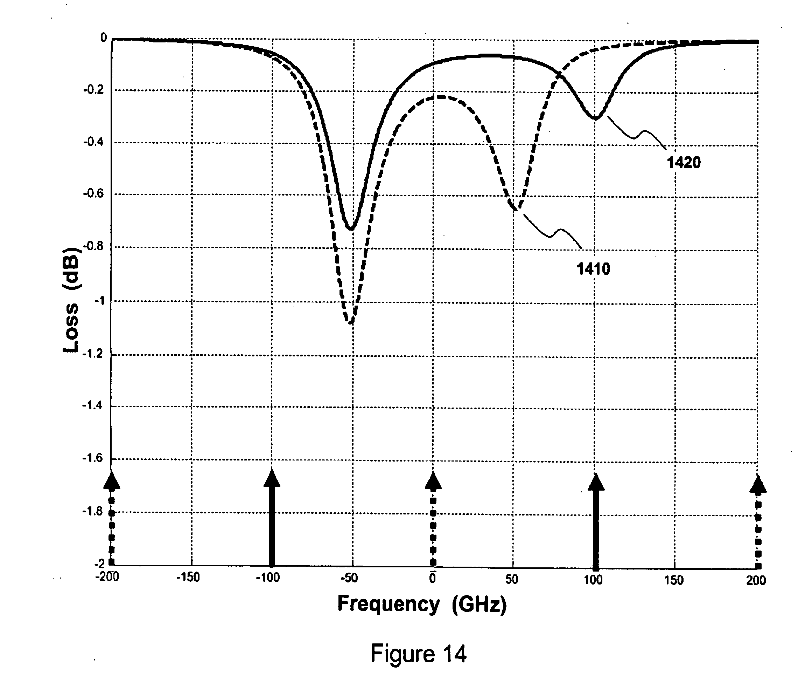

**Fig. 14** illustratively shows the effects of the solution above, with the assumption that the channel spacing is equal to 100 GHz. Curve **1410** represents either state **B** or state **B'** of **Fig. 13A** (dotted lines) and curve **1420** correspondingly represents respectively either state C or state C' of **Fig. 13A** (dotted lines), with the 'proximal' ring overshoot (assuming that the massive tuning takes place in the positive frequency region). The thru channel +100 GHz away from the channel at zero frequency suffers a hit only in correspondence to a resonance separation of about one and half the channel spacing, in contrast to a possible hit in correspondence to only one channel spacing in absence of the overshoot.

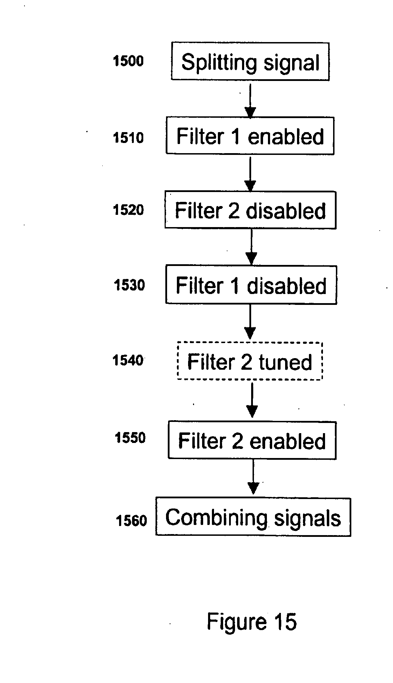

In the following, a method for optical filtering according to an exemplary embodiment of the present invention will be described with reference to Fig. 15. This method may be implemented by operation of the scheme of the optical device 200 of **Figure 2****,** described above. Where useful for the understanding of the method of the present invention, reference will be made to elements and corresponding reference numerals of **Figure 2****,** without restricting the scope of the method. The method is particularly suitable to filter at least an optical channel within a plurality of WDM channels, while leaving the thru channels with a minimum alteration or no alteration at all.

First (step **1500**), a WDM optical signal comprising a plurality of optical channels having respective optical frequencies lying on a grid ('WDM grid') of allocated frequencies equally spaced by a given frequency spacing, said grid occupying an optical bandwidth BW, is split, for example by way of the optical splitter **210,** into a first and a second portion spatially separated. It is noted that the WDM optical signal does not necessarily need to comprise all the channels which may occupy said grid until it is filled. Actually, one or more of the allocated frequencies of the grid may be vacant. Nevertheless, the method and device of the present invention is suitable for processing a full-grid WDM signal and the examples below will refer to this case, without limiting the scope of the invention.

The first portion of the optical signal comprises a sub-group of said optical channels having optical frequencies lying on a first sub-grid having frequencies spaced by the double of said frequency spacing and the second portion comprises the remaining optical channels lying on a respective second sub-grid of frequencies. The first and second frequency sub-grids, respectively associated to the first and second portion, are complementary sub-grids of the grid of allocated WDM frequencies described above. Exemplarily, the first portion may comprise the channels having even parity and the second portion the channels having odd parity. In the present description, the expression 'belonging to the first/second portion' is equivalent to the expression 'having first/second parity'. In each portion, the residual optical power of the channels substantially belonging to the other portion with respect to the optical power of the first portion channels ('cross-talk') is below -10 dB. Preferably, the cross-talk is below -15 dB, more preferably below - 20 dB. In the second portion, the cross-talk of the channels substantially belonging to the first portion may be approximately equal to the cross-talk in the first portion (as shown, e.g., in **Fig. 7**) or it may be worse (as shown, e.g., in **Fig. 4**)**.**

In step 1510, an initial channel belonging to the first portion is filtered by way of a first resonant optical filter **250,** adapted to act solely on the first portion, and tuned so that a respective resonance of each resonator of the first optical filter falls within a first frequency band having bandwidth less than or equal to 15 GHz. Typically, said first optical band at least partially overlaps the optical bandwidth of frequencies of said initial channel. Being the step **1510** similar to step **1010** described above, for a detailed discussion reference is done to step **1010.**

In step 1520 the second optical filter 260, which is adapted to act solely on the second portion, is subject to a disabling step similar to step **1020.** Accordingly, a first separation is obtained between each resonance of at least one resonator of the second optical filter falling within said optical bandwidth and a respective resonance of at least another different resonator of the second optical filter nearest to said each resonance, said first separation being greater than or equal to 50 GHz. This step may be performed before or after or contemporarily to step **1510.**

Subsequently to step **1510** (e.g. because of the need of changing the channel to be filtered) in step **1530** the first optical filter **250** may be subject to a disabling step of the kind of step **1020.** Accordingly, a second separation is obtained between said respective resonance of at least one resonator of the first optical filter with respect to said respective resonance of at least another different resonator of the first optical filter, said second separation being greater than or equal to 50 GHz.

In optional step **1540** the second optical filter 260 is subject to a massive tuning step of the kind of step **1030.** This step **1540** is performed after step **1520** so as to mitigate hits.

In step **1550** the second optical filter **260** is subject to an enabling step of the kind of step **1040** described above. This step **1550** is performed after step **1540.**

The first and second portions of optical channels are then recombined (step 1560), for example by way of the combiner **220.**

The method described in **Fig. 15** allows tuning the device **200** from an initial channel to a final channel having opposite parity. In case the initial and final channels have the same parity, the procedure is more simply the one described with reference to **Fig. 10** or **13A** to **13C** applied to the 'enabled' filter while leaving the other ('disabled') filter typically unaffected.

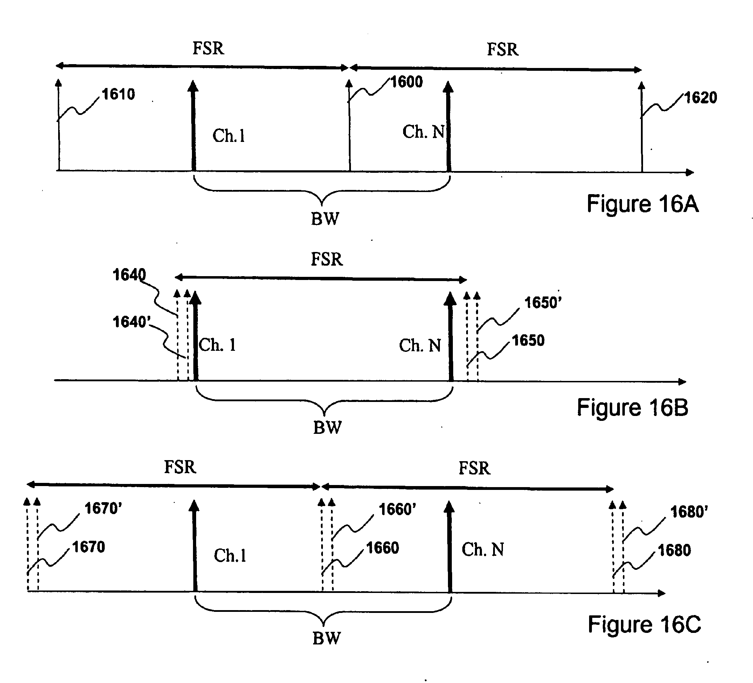

In one configuration, the optical filters **250** and **260** have an overall FSR which is larger than the WDM bandwidth. This is pictorially illustrated in **Fig. 16A to C**, wherein the horizontal axis represents the optical frequency. The left thick arrow represents the first allocated optical frequency of the WDM grid (Channel 1, conventionally taken as the origin of the axis, i.e. at 0 GHz) and the right thick arrow that of the last allocated frequency (Channel N, exemplarily at 4000 GHz for the 41^{st} channel of a 100 GHz spacing full-grid signal, BW= 4000 GHz). The thin arrows in **Fig. 16A** represent the overall resonances of the enabled optical filter. The arrow **1600** represents the 'active resonance', i.e. that overall resonance referred to above which overlaps the optical frequency of the initial channel to be filtered belonging to the first portion. The two adjacent overall resonances **1610** and **1620** (called 'out-of-band resonances') are made to lie outside the WDM optical bandwidth occupied by the grid of allocated frequencies and consequently they do not interact, in use, with the WDM optical channels.

**Fig. 16B** shows, with reference to a two-ring filter, that it is possible in principle to massively tune the disabled filter (filter **260** of step **1520**) so that all the respective resonances of its individual resonators are outside the WDM band. The thin dashed arrows now represent the resonances of the individual rings within the optical filter **260.**

However, the method above advantageously works independently from the position, within the frequency spectrum, of the respective resonances of the individual resonators of the disabled filter. Preferably the disabled filter has a resonance separation according to the preferred ranges described with reference to **Figs. 10** to **13****,** e.g. greater than or equal to 300 GHz, in order to reduce the loss on the thru channels while device 200 operates and during massive tuning of the filter itself.

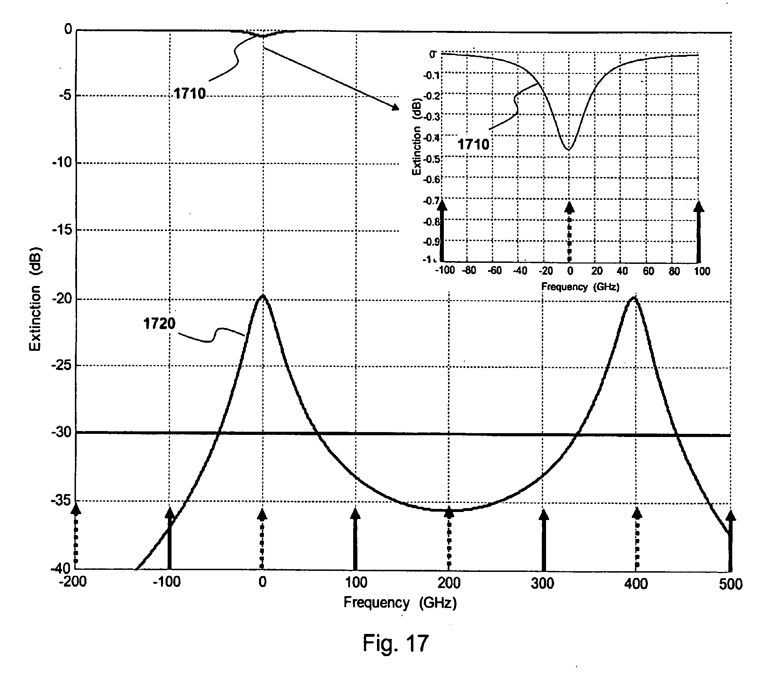

For example, with reference to **Fig. 16C****,** it may be advantageous, in order to have it ready for massive tuning, to place the disabled filter so that one respective resonance of all the individual resonators is placed in the middle of the WDM band, while the other respective resonances are out of the WDM band. Preferably, the resonance separation of the disabled filter is an even multiple of the WDM grid spacing, for example 400 GHz or 600 GHz for 100 GHz channel spacing. In addition, the above respective resonances of all the individual resonators overlap only the channel frequencies of the opposite parity or, more in general, they all are within a distance of half (more preferably a quarter) of the WDM grid spacing from the respective closest channel frequency of the opposite parity. In **Fig. 17** it is shown an example of resonance positions for a two-ring disabled filter, wherein the solid thick arrows represent the channels belonging to the portion of the WDM channels interacting with the disabled filter. It is clear that they suffer a negligible loss. Curve **1710** represents the thru response and curve **1720** the drop response.

In an alternative preferred configuration, the overall FSR of the optical filters **250** and **260** is smaller than the WDM bandwidth.

In a preferred configuration wherein the free spectral range of the first and second tunable resonant optical filter **250** and **260** is substantially equal to an odd multiple of the WDM frequency spacing and greater than half of the WDM optical bandwidth, as described above, the enabled optical filter **250** in state **1510** ('active filter') has one of its resonance ('active resonance') overlapping the optical frequency of said initial channel, one of the two adjacent resonances (referred to as the 'parked resonance') overlapping an optical frequency of the second sub-grid and the other adjacent resonance lying outside said optical bandwidth..

This is pictorially illustrated in **Fig. 18A****,** having the same conventional symbols of **FIG 16A****.** The thin arrows represent the overall resonances of the enabled optical filter ('active filter'). The arrow **1800** represents the 'active resonance', i.e. that resonance referred to above which overlaps the optical frequency of the initial channel to be filtered belonging to the first portion. It is exemplarily assumed that the initial channel is the 26^{th} (even) channel at 2500 GHz. An adjacent resonance **1810** ('parked resonance') overlaps one allocated optical frequency of the second sub-grid (exemplarily, assuming an FSR of the optical filters **250** and **260** substantially equal to 2300 GHz, e.g. FSR= 2300±20 GHz, the optical frequency at 200 GHz, i.e. the odd third channel). This has the advantage that, owing to the fact that no or very small optical power (related to the cross-talk) is present at this resonant frequency, the active optical filter typically interacts weakly, or not at all, with the optical power in correspondence of this (odd) frequency. If this interaction is not negligible, additional measures may be taken, as described below. In addition, being the resonance **1810** placed in between two adjacent even channels, the latter are not significantly affected in terms of amplitude, phase and dispersion by the optical filter 250.

The other adjacent resonance **1820** (called 'out-of-band resonance') is made to lie outside the WDM optical bandwidth occupied by the grid of allocated frequencies (exemplarily at frequency 2500+2300=4800 GHz) and consequently it does not interact, in use, with the optical channels.

Occasionally, depending on the value of the FSR and on the initial channel, it may happen that also the first adjacent resonance is made to lie outside the optical bandwidth occupied by the grid of allocated frequencies, for example in case the initial filtered channel lies at or in the proximity (i.e. within the range ± |FSR-BW/2-Δf|) of the center bandwidth. In the example above, where FSR=2300 GHz and center bandwidth BW/2=2000 GHz, in case the even filtered channel lies in the range 1800-2200 GHz (i.e. 1900 or 2100 GHz), both the two adjacent resonances falls outside the WDM bandwidth.

The feature that the FSR of the first and second optical filter **250** and **260** is an odd multiple of the channel spacing and it is also greater than half of the occupied bandwidth, in combination with the first optical splitter splitting odd and even channels towards the first and the second optical filter, allows to filter an arbitrary channel in an optical bandwidth while tuning the first and the second optical filter 250 and 260 by an FSR which may be smaller than said optical bandwidth (in the example above 2300 GHz instead of 4000 GHz for the second optical filter **260** and 2100 GHz or 2300 GHz for the first optical filter **250**).

**Fig. 18B** depicts a state substantially similar to that of **Fig. 16C** and corresponding to state 1520. The arrows **1830** and **1830'** represent the respective in-band resonances of the first and second resonator and the arrows **1840, 1840'** and **1850, 1850'** represent respectively the two respective adjacent resonances of the first and second resonator, which are made to lie outside the optical bandwidth occupied by the allocated frequencies grid and consequently they do not interact with the optical channels. In addition to the conditions described with reference to **Figs. 16C** and **17****,** it is advantageous that each individual resonator has an FSR which exceeds the half of the WDM bandwidth by more than the frequency detuning, in order to avoid that an adjacent resonance (such as e.g. resonance **1840'**) falls on a WDM channel having 'wrong' parity. Alternatively, care should be taken that the first resonator has the resonances as depicted by arrows **1830, 1840** and **1850** in **Fig. 18B****.**

With reference to the preferred case depicted in **Figs. 18A and B**, in case the channel to be filtered needs to be changed from an initial channel to a final one (i.e. tuning of the optical device 200), the following steps may be preferably performed. Preferably, the initial and final channels are switched off.

In case the final channel belongs to the same portion of the initial channel, i.e. the first portion, it is sufficient to successively disable, tune and enable the first optical filter **250** in accordance to the present invention, so that one among the previously active resonance **1800,** the previously parked resonance **1810** or the other adjacent resonance **1820** overlaps the final channel, depending on the relative position between the frequency of the final channel and the above resonances. For example, the resonance **1810** may be used to span over the (frequencies of the first portion in the) first half of the bandwidth and the resonance **1800** to span over the (frequencies of the first portion in the) second half of the bandwidth. The second optical filter **260** may not need to be tuned, being already properly disabled and, preferably, properly placed along the frequency spectrum as described above.

It will now be assumed that the final channel belongs to the second portion, i.e. the other portion with respect to the initial channel.

With reference to the first portion, the first optical filter **250** is subject to disabling (step **1530**). The same considerations above with regard to step **1520** may be applied to the optical filter **250.**

The second optical filter **260** (in disabled state) is massively tuned (step **1540**) and then enabled (step **1550**) so that one of its resonances ('active resonance') overlaps the optical frequency of the final channel, one of the two adjacent resonances ('parked resonance') overlaps an optical frequency of the first sub-grid and the other adjacent resonance is an out-of-band resonance. Occasionally, it may happen that also the first adjacent resonance lies outside the optical bandwidth. The choice of the active resonance depends on the relative position between the frequency of the final channel and the resonances, as described above (e.g., the resonance **1830, 1830'** may be tuned so as to become aligned and constitute an active resonance on a channel belonging to the second portion).

Optionally, in case they were switched-off, the initial and final channels are now switched-on. Said final channel is now filtered by way of said second optical filter 260; for example it may be dropped.

During the entire operation, the thru channels remain substantially unaffected.

Referring again to the case depicted in **Fig. 18A****,** in the following the disabling procedure of an active filter (e.g. step 1530) is examined in details with particular reference to the parked resonance **1810.** The parked resonance in fact is only one channel spacing (e.g. 100 GHz) away from the closest channel, while the active resonance has its closest channel on a coarser (i.e. two times the channel spacing) grid. The same discussion below may hold for the enabling procedure (step 1550) of the optical filter of **Fig. 18B****.**

In case the disabling procedure of the active filter is performed according to the scheme depicted in **Fig. 10****,** the channel placed at a distance of one WDM channel spacing from the parked resonance and on the side toward which the resonance separation occurs suffers a relatively high hit when the resonance separation of the tuned resonator (e.g. curve 700) reaches the value of the WDM channel spacing (e.g. state **B** of **Fig. 10**). Exemplarily, with reference to **Fig 10****,** if channel 2 correspond to the parked resonance, than channel 3 is the closest channel suffering the above loss. Such a loss may be appreciated in **Fig. 11B****,** wherein the dashed arrow now represents the parked resonance and a channel at 100 GHz (not shown) is the closest channel under analysis (assuming the WDM channel spacing equal to 100 GHz). It can be seen that a loss of about 0.65 dB hits this channel. Such a problem is mitigated in the region of the active resonance, since in this case the closest channel is placed two times the WDM spacing far from the active resonance. In this case, **Fig. 11B** shows that the loss remains below 0.5 dB, at about 0.2 dB. A possible solution to this problem is to disable the filter according to the techniques described with reference to **Figs. 13A to C**. Roughly speaking, the first resonator may be shifted back of about 50 GHz (or less than half of the grid) and the second ring can then be detuned forward. From **Fig. 14** it is clear that the channel (solid arrows at +100 GHz) adjacent the parked resonance (dashed arrow at 0 GHz) suffers an extra loss lower than about 0.5 dB. It is advantageous that the 'overshooting' does not exceed the channel spacing (i.e. 100 GHz), being preferably not greater than half of the grid spacing.

The methods for tunable filtering an optical channel described above are particularly suitable in case more than one independent channel is to be filtered while reducing at a minimum the loss and/or distortion of the thru channels. Those methods, as well the corresponding devices 200, may be implemented without the need of tuning the resonances, i.e. changing the operation point, of the optical splitter and combiner **210** and **220.** Indeed, they may be kept, during operation, at a fixed operation point, by way, e.g., of a trimming device. This is made possible by the particular combination of the optical splitter and combiner **210** and **220** and of the first and second optical filter **250, 260** described above, which also allows cascading the filtering cells **299** as previously described.

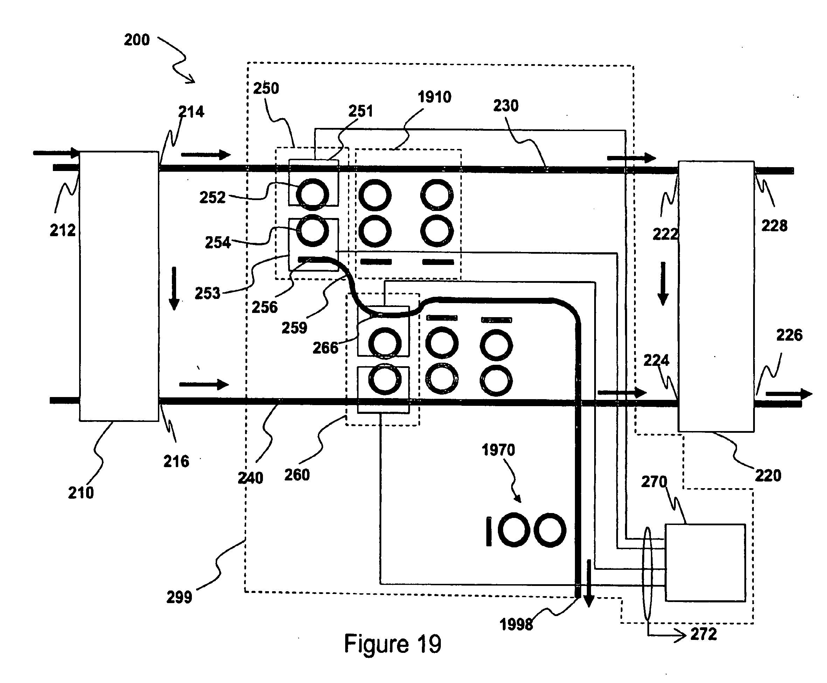

With reference now to **Figure 19****,** an exemplary realization of a tunable optical add and/or drop multiplexing device OADM **200** in accordance with the present invention will now be described. Where appropriate, the same reference numerals of **Figure 2** for like elements have been used and, for these elements, reference is made to the description above.

The filter cell 299 of the OADM **200** is a tunable optical add and/or drop cell **299** wherein the first and the second resonant optical filters **250, 260** are tunable optical add and/or drop filters (OADF) **250, 260** comprising identical microring resonators. The optical filters **250** and **260** are exemplarily structurally identical and the following description of the optical filter **250** equally applies to the optical filter **260** (wherein the second optical path **240** takes the place of the first optical path 230). It is to be understood that the microring resonators of the embodiment shown in **Fig. 19** may be replaced by any suitable resonator, such as racetracks, waveplates, etc. The first optical filter **250** is adapted to drop (and/or add) a WDM channel from (and/or into) the first optical path **230.** It comprises a first microring **252** optically coupled to the optical path **230** and a second microring **254** coupled between the first microring and the drop waveguide **256,** which means that, in operation, the optical radiation resonant with both the microring resonances propagates from the optical path **230** through the first microring and then through the second microring and finally to the drop waveguide **256.** The drop port **259** of the optical filter 250 may belong to the drop waveguide **256,** as shown in **Fig. 19****.** Advantageously, additional series-coupled microrings may be added within the first optical filter **250,** e.g., in order to improve the roll-off of the drop function of the optical filter **250.**

Optionally, additional microring-based filtering stages **1910** may be cascaded along the optical path **230** in order to improve the optical response of the optical filter 250. For example, each of them may be apt to 'clean' the thru channels (i.e. to further remove the resonant channel from the optical path **230**) and/or to add a further channel, preferably equal to the dropped one, into the first optical path **230,** e.g. in case the filter **250** acts solely as a drop stage. In **Fig. 19** two further stages **1910** are exemplarily shown having a configuration and an operating point (i.e. resonance frequencies' position) identical to that of the optical filter 250, so as to further clean the thru channels. It is to be understood that these further stages may be viewed as part of the optical filter **250.**

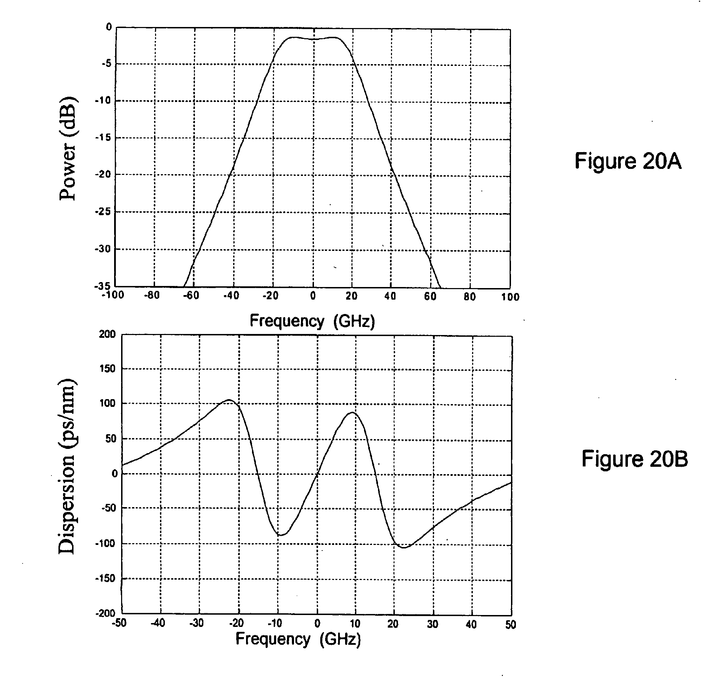

In **Figures 20A** and **20B** there are respectively plot the calculated (transfer matrix method) amplitude and dispersion drop response at the drop port **259** of the two series-coupled microrings (add and/or) drop filter **250** exemplarily described above. As in the previous examples (see **Figs. 4****,** **5** and **7****, 8**) silicon waveguides buried in a SiO₂ cladding were contemplated, but the OADF 250 can be realized by any known optical material system. Within each stage (**250, 1910**)**,** the power coupling coefficients of the couplers between the bus-waveguides (e.g. **230** or **256**) and the waveguides constituting the microrings are equal to about 7.8% (suitable range 6.5% -8.5%) and the power coupling coefficient of the coupler between the two adjacent microrings is equal to about 0.21% (suitable range 0.19% - 0.22%). The microring radius is equal to about 5(±1%) µm, which corresponds to a FSR equal to about 2300 GHz (18.4 nm around 1550 nm). In the exemplary embodiment, the bus and the microring waveguides are respectively about 400 nm and 490 nm wide and about 220 nm high, the bus to ring gap is about 130 nm wide and the ring to ring gap is about 260 nm wide. All the other design parameters have been assumed equal to the previous examples (see **Figs. 4****,** **5** and **7****, 8**)**.** The exemplarily designed second order Chebyshev optical filter 250 meets the following specifications: passband (at drop port **259**) equal to about 35 GHz with drop loss less than about 3dB, extinction (at drop port **259**) on adjacent WDM channels (200 GHz spacing) greater than or equal to about 30 dB.

The OADF **250** may be thermally tuned by micro-heaters **251, 253** placed above the microrings, e.g. over the SiO₂ upper cladding. In addition to thermo-optic, other known tuning techniques may be used, such as electro-optics, magneto-optics, opto-mechanical, MEMS actuated, acusto-optic, elasto-optic, stress actuated and the like.

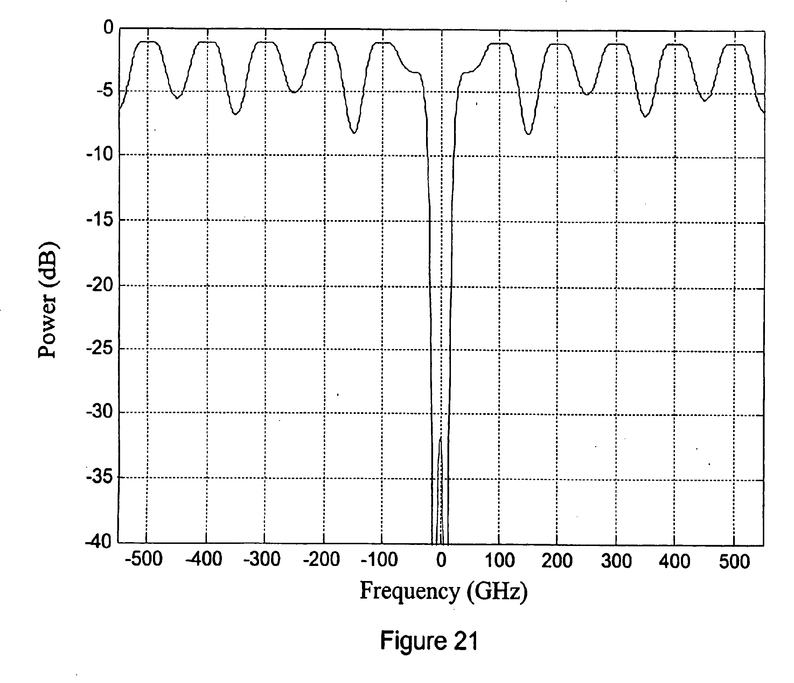

**Fig. 21** shows the power response at the output port **226** of the tunable OADM 200 exemplarily described with reference to **Figs. 19** and **20****,** when the optical splitter and combiner **210, 220** are those described with reference to **Figs. 3****,** **4** and **5** (two series coupled rings), in the embodiment wherein the combiner **220** has the resonances shifted by half FSR (i.e. one frequency spacing) with respect to the optical splitter **210** (so as to output the combined optical radiation at port **226**)**.** The following filter specifications are met: the extinction ratio at the drop channel is less than 30 dB and the insertion loss for the thru channels is about 1 dB.

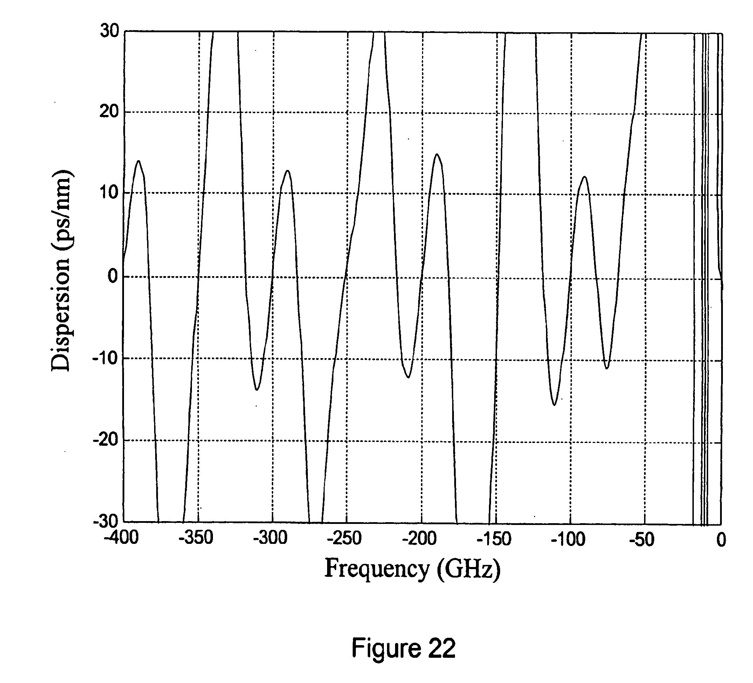

**Fig. 22** shows the corresponding dispersion response at the output port **226.** The dispersion specification of 20 ps/nm is met in correspondence of the thru channels.

In an embodiment, as shown in **Fig. 19****,** the drop cell **299** may have a single drop port **1998.** This can be accomplished when the drop waveguide **256** of the OADF **250** and the drop waveguide **266** of the OADF **260** are the same waveguide. In other words, a common drop waveguide (**256, 266**) is optically coupled both to the drop filter **250** and to the drop filter **260.** The drop port **1998** may belong to this common waveguide. In this configuration, one of the two OADF (e.g. **260,** as shown in **Fig. 19**) is placed downstream the other optical filter (e.g., **250**) with respect to the direction of propagation of a dropped optical radiation along the common drop waveguide. In other words, OADF **260** is placed downstream the output port **259** of the optical filter **250.** In this case, care should be taken that the downstream OADF does not disturb the channel dropped by the upstream OADF in the common drop waveguide. Moreover, a common drop waveguide allows a single drop port in presence of the two OADFs **250, 260** without adding loss to the dropped channel, which for example arises when using a conventional 3-dB coupler.

In addition, it is advantageous that the disabled filter does not send any "spurious" signal to the common drop output port **1998,** preferably with an extinction of at least 30 dB in the drop port (see discussion for **Fig. 17**)**.**

Optionally, a drop cleaning stage **1970** may be coupled to the common drop waveguide (**256, 266**) to further clean the dropped channel. For example, the role of the drop cleaning stage may be to remove the residual optical power, if any, in correspondence to the parked resonance of the active one of the two OADFs **250, 260.**

Although the present invention has been disclosed and described by way of some embodiments, it is apparent to those skilled in the art that several modifications to the described embodiments, as well as other embodiments of the present invention are possible without departing from the essential features thereof/the scope thereof as defined in the appended claims.

## Claims

1. A method for filtering an optical signal comprising a plurality of channels lying on a grid of optical frequencies equally spaced by a given frequency spacing and occupying an optical bandwidth, **characterised by** :
a) splitting said optical signal into a first and a second portion spatially separated, wherein said first portion substantially comprises the channels which lie on a first sub-grid comprising a first set of said optical frequencies equally spaced by the double of said frequency spacing and the second portion substantially comprises the remaining channels which lie on a second sub-grid comprising the remaining optical frequencies of said grid;
b) operating a first optical filter (250) comprising a plurality of resonators (252, 254) each having a respective free spectral range, wherein a first resonator (252) of said plurality is optically coupled to said first portion and the remaining resonators of said plurality are optically coupled in series to said first resonator, so that a respective resonance of each one of said plurality of resonators falls within a first frequency band having bandwidth less than or equal to 15 GHz and comprising a first channel belonging to the first portion;
c) operating a second optical filter (260) comprising a plurality of respective resonators (262, 264) each having a respective free spectral range, wherein a respective first resonator (262) of said plurality is optically coupled to said second portion and the remaining resonators of said plurality are coupled in series to said first resonator, so as to obtain a first separation between each resonance of at least one resonator of the second optical filter falling within said optical bandwidth and a respective resonance of at least another different resonator of the second optical filter nearest to said each resonance, said first separation being greater than or equal to 25 GHz; and
d) recombining said first and second filtered portions.

2. The method of claim 1 wherein all the resonators of the first optical filter have the same free spectral range and all the resonators of the second optical filter have the same respective free spectral range.

3. The method of claim 2 wherein the free spectral range of the resonators of the first and second optical filter is substantially equal to an odd multiple of said frequency spacing and greater than half of said optical bandwidth.

4. The method of the preceding claim wherein the free spectral range of the resonators of the first and/or the second optical filter exceeds the half of the optical bandwidth by more than said frequency spacing.

5. The method of any of the preceding claims wherein in step b) the first optical filter is operated by tuning at least one resonator of the first optical filter differentially from the remaining resonators and in step c) the second optical filter is operated by tuning the said at least one resonator of the second optical filter differentially from the said at least another different resonator of the second optical filter.

6. The method of any of the above claims wherein said first separation is equal to an even multiple of the frequency spacing.

7. The method of claim 6, wherein said each resonance of said at least one resonator of the second optical filter falling within said optical bandwidth lies within a distance of half of the frequency spacing from the respective nearest optical frequency of said first sub-grid of optical frequencies.

8. The method of any of the above claims, further comprising the steps of:
e) operating said first optical filter (250) so as to obtain a second separation between said respective resonance of at least one resonator of the first optical filter with respect to said respective resonance of at least another different resonator of the first optical filter, said second separation being greater than or equal to 25 GHz; and
f) operating said second optical filter (260) so that a respective resonance of each one of said plurality of resonators of the second optical filter falls within a second frequency band, different from the first frequency band, having bandwidth less than or equal to 15 GHz and comprising a second channel belonging to the second portion.

9. The method of claim 8 further comprising, after step c) and before step f), the step of:
g) tuning all the resonators of the second optical filter so as to move all respective resonances of the resonators of the second optical filter by a frequency interval greater than said frequency spacing while maintaining a distance between said each resonance of said at least one resonator of the second optical filter with respect to said respective nearest resonance of said at least another different resonator of the second optical filter not less than said first separation.

10. The method of claim above 9, wherein in step g) all the resonators of the second optical filter are tuned substantially in unison so as to equally and contemporarily move all said respective resonances of the resonators of the second optical filter.

11. An optical device (200) **characterised by**:
- an optical splitter (210) having an input port (212), a first output port (214) and a second output port (216) and being configured for receiving at said input port an optical signal comprising a plurality of channels lying on a grid of optical frequencies equally spaced by a frequency spacing and occupying an optical bandwidth, and wherein said optical splitter (210) is configured for outputting at said first and second output port respectively a first and a second portion of said optical signal wherein said first portion substantially comprises the channels which lie on a first sub-grid of said grid comprising a first set of said optical frequencies equally spaced by the double of said frequency spacing and the second portion substantially comprises the remaining channels which lie on a second sub-grid comprising the remaining optical frequencies of said grid;
- an optical combiner (220) having a respective first (222) and second (224) input port and a respective output port (226; 228) and being configured for combining two optical radiations, input respectively into the first and second input port, and outputting the combined optical radiation into the respective output port;
- a first optical path (230) optically connecting the first output port (214) of the optical splitter (210) to the first input port (222) of the optical combiner (220);
- a second optical path (240) optically connecting the second output port (216) of the optical splitter (210) to the second input port (224) of the optical combiner (220);
- a first optical filter (250) comprising a plurality of resonators (252, 254) each having a respective free spectral range, wherein a first resonator (252) of said plurality is optically coupled to the first optical path (230) and the remaining resonators of said plurality are optically coupled in series to said first resonator;
- a second optical filter (260) comprising a plurality of respective resonators (262, 264) each having a respective free spectral range, wherein a respective first resonator (262) of said plurality is optically coupled to the second optical path (240) and the remaining resonators of said plurality are coupled in series to said first resonator; and
- a control system (270, 272, 251, 253, 261, 263) operatively connected to the plurality of resonators of the first optical filter (250) and to the plurality of resonators of the second optical filter (260), said control system being configured to perform the steps of:
a) operating the first optical filter (250) so that a respective resonance of each one of said plurality of resonators falls within a first frequency band having bandwidth less than or equal to 15 GHz;
b) operating the second optical filter (260) so as to obtain a first separation between each resonance of at least one resonator of the second optical filter falling within said optical bandwidth and a respective resonance of at least another different resonator of the second optical filter nearest to said each resonance, said first separation being greater than or equal to 25 GHz.

12. The device of claim 11 wherein said plurality of resonators of the first optical filter and said plurality of resonators of the second optical filter each comprises two and no more than two resonators.

13. The device of any of claims 11 to 12 wherein said plurality of resonators (252, 254) of the first optical filter (250) is optically coupled in series between the first optical path (230) and a first waveguide (256) and said plurality of resonators (262, 264) of the second optical filter (260) is optically coupled in series between the second optical path (240) and a second waveguide (266).

14. The device of claim 13 wherein the first waveguide (256) of the first optical filter (250) and the second waveguide (266) of the second optical filter (260) are the same waveguide so that the first optical filter (250) and the second optical filter (260) share the same waveguide (256, 266).

15. An optical communication system (100) comprising a transmitter (110), a receiver (120), an optical line (130) optically connecting the transmitter and the receiver and an optical device (200) according to any of claims 11 to 14 wherein the optical device (200) is coupled along the optical line (130).

## Patentansprüche

1. Verfahren zum Filtern eines optischen Signals umfassend eine Vielzahl von Kanälen, die auf einem Gitter von optischen Frequenzen liegen, die durch eine gegebene Frequenzbeabstandung gleich beabstandet sind und eine optische Bandbreite belegen, **gekennzeichnet durch**:
a) Teilen des genannten optischen Signals in einem ersten und einem zweiten Abschnitt, die räumlich getrennt sind, wobei der genannte erste Abschnitt im wesentlich die Kanäle umfasst, die auf einem ersten Unter-Gitter liegen, das einen ersten Satz von den genannten optischen Frequenzen umfasst, die durch das Doppelte der genannten Frequenzbeabstandung gleich beabstandet sind, und der zweite Abschnitt im wesentlich die übrigen Kanäle umfasst, die auf einem zweiten Unter-Gitter liegen, das die übrigen optischen Frequenzen des genannten Gitters umfasst;
b) Betätigen eines ersten optischen Filters (250) umfassend eine Vielzahl von Resonatoren (252, 254), die jeweils einen entsprechenden freien Spektralbereich haben, wobei ein erster Resonator (252) der genannten Vielzahl mit dem genannten ersten Abschnitt optisch gekoppelt ist und die übrigen Resonatoren der genannten Vielzahl mit dem genannten ersten Resonator optisch in Reihe gekoppelt sind, so daß eine entsprechende Resonanz von jedem Resonator der genannten Vielzahl von Resonatoren innerhalb eines ersten Frequenzbands fällt, das eine Bandbreite kleiner oder gleich 15 GHz hat und einen ersten Kanal umfasst, der dem ersten Abschnitt zugehört;
c) Betätigen eines zweiten optischen Filters (260) umfassend eine Vielzahl von entsprechenden Resonatoren (262, 264), die jeweils einen entsprechenden freien Spektralbereich haben, wobei ein entsprechender erster Resonator (262) der genannten Vielzahl mit dem genannten zweiten Abschnitt optisch gekoppelt ist und die übrigen Resonatoren der genannten Vielzahl mit dem genannten ersten Resonator in Reihe gekoppelt sind, so daß man eine erste Trennung erhält zwischen jeder Resonanz von mindestens einem Resonator des zweiten optischen Filters, die innerhalb der genannten optischen Bandbreite fällt, und einer entsprechenden Resonanz von mindestens einem anderen verschiedenen Resonator des zweiten optischen Filters, die der genannten jeden Resonanz am nächsten liegt, wobei die genannte erste Trennung größer oder gleich 25 GHz ist; und
d) Wiedervereinigen der genannten ersten und zweiten gefilterten Abschnitte.

2. Verfahren nach Anspruch 1, worin alle Resonatoren des ersten optischen Filters den gleichen freien Spektralbereich haben und alle Resonatoren des zweiten optischen Filters den gleichen entsprechenden freien Spektralbereich haben.

3. Verfahren nach Anspruch 2, worin der freie Spektralbereich von den Resonatoren des ersten und zweiten optischen Filters im wesentlich gleich einem ungeraden Vielfachen der genannten Frequenzbeabstandung und größer als die Hälfte der genannten optischen Bandbreite ist.

4. Verfahren nach dem vorherigen Anspruch, worin der freie Spektralbereich von den Resonatoren des ersten und/oder des zweiten optischen Filters die Hälfte der optischen Bandbreite um mehr als die genannte Frequenzbeabstandung überschreitet.

5. Verfahren nach irgendeinem der vorherigen Ansprüche, worin im Schritt b) der erste optische Filter durch Abstimmen mindestens eines Resonators des ersten optischen Filters anders als der übrigen Resonatoren betätigt wird und im Schritt c) der zweite optische Filter durch Abstimmen des genannten mindestens einen Resonators des zweiten optischen Filters anders als des genannten mindestens anderen verschiedenen Resonators des zweiten optischen Filters betätigt wird.

6. Verfahren nach irgendeinem der vorherigen Ansprüche, worin die genannte erste Trennung gleich einem geraden Vielfachen der Frequenzbeabstandung ist.

7. Verfahren nach Anspruch 6, worin die genannte jede Resonanz von dem genannten mindestens einen Resonator des zweiten optischen Filters, die innerhalb der genannten optischen Bandbreite fällt, innerhalb eines Abstands, der der Hälfte der Frequenzbeabstandung entspricht, von der entsprechenden nächsten optischen Frequenz des genannten ersten Unter-Gitter von optischen Frequenzen liegt.

8. Verfahren nach irgendeinem der vorherigen Ansprüche, weiter umfassend die folgenden Schritte:
e) Betätigen des genannten ersten optischen Filters (250), so daß man eine zweite Trennung erhält zwischen der genannten entsprechenden Resonanz von mindestens einem Resonator des ersten optischen Filters und der genannten entsprechenden Resonanz von mindestens einem anderen verschiedenen Resonator des ersten optischen Filters, wobei die genannte zweite Trennung größer oder gleich 25 GHz ist; und
f) Betätigen des genannten zweiten optischen Filters (260), so daß eine entsprechende Resonanz von jedem Resonator der genannten Vielzahl von Resonatoren des zweiten optischen Filters innerhalb eines zweiten Frequenzbands fällt, das von dem ersten Frequenzband verschieden ist, eine Bandbreite kleiner oder gleich 15 GHz hat und einen zweiten Kanal umfasst, der dem zweiten Abschnitt zugehört.

9. Verfahren nach Anspruch 8, weiter umfassend, nach Schritt c) und vor Schritt f), den folgenden Schritt:
g) Abstimmen von allen Resonatoren des zweiten optischen Filters, so daß alle entsprechenden Resonanzen von den Resonatoren des zweiten optischen Filters um einen Frequenzabstand verschoben werden, der größer als die genannte Frequenzbeabstandung ist, während zwischen der genannten jeden Resonanz von dem genannten mindestens einen Resonator des zweiten optischen Filters und der genannten entsprechenden nächsten Resonanz von dem genannten mindestens anderen verschiedenen Resonator des zweiten optischen Filters ein Abstand gehalten wird, der nicht kleiner als die genannte erste Trennung ist.

10. Verfahren nach Anspruch 9, worin im Schritt g) alle Resonatoren des zweiten optischen Filters im wesentlich im Einklang abgestimmt werden, so daß alle genannten entsprechenden Resonanzen von den Resonatoren des zweiten optischen Filters in gleicher Weise und gleichzeitig verschoben werden.

11. Optische Vorrichtung (200), **gekennzeichnet durch**:
- einen optischen Teiler (210), der einen Eingabeanschluss (212), einen ersten Ausgabeanschluss (214) und einen zweiten Ausgabeanschluss (216) aufweist und zum Empfangen **durch** den genannten Eingabeanschluss eines optischen Signals umfassend eine Vielzahl von Kanälen, die auf einem Gitter von optischen Frequenzen liegen, die **durch** eine Frequenzbeabstandung gleich beabstandet sind und eine optische Bandbreite belegen, ausgeführt ist, und wobei der genannte optische Teiler (210) zum Ausgeben **durch** den genannten ersten und zweiten Ausgabeanschluss jeweils eines ersten und eines zweiten Abschnitts des genannten optischen Signals ausgeführt ist, wobei der genannte erste Abschnitt im wesentlich die Kanäle umfasst, die auf einem ersten Unter-Gitter des genannten Gitters liegen, das einen ersten Satz von den genannten optischen Frequenzen umfasst, die **durch** das Doppelte der genannten Frequenzbeabstandung gleich beabstandet sind, und der zweite Abschnitt im wesentlich die übrigen Kanäle umfasst, die auf einem zweiten Unter-Gitter liegen, das die übrigen optischen Frequenzen des genannten Gitters umfasst;
- einen optischen Vereiniger (220), der einen entsprechenden ersten (222) und zweiten (224) Eingabeanschluss und einen entsprechenden Ausgabeanschluss (226; 228) aufweist und zum Vereinigen zwei optischer Strahlungen, die jeweils **durch** den ersten und zweiten Eingabeanschluss eingegeben werden, und zum Ausgeben der vereinigten optischen Strahlung **durch** den entsprechenden Ausgabeanschluss ausgeführt ist;
- einen ersten optischen Weg (230), der den ersten Ausgabeanschluss (214) des optischen Teilers (210) mit dem ersten Eingabeanschluss (222) des optischen Vereinigers (220) optisch verbindet;
- einen zweiten optischen Weg (240), der den zweiten Ausgabeanschluss (216) des optischen Teilers (210) mit dem zweiten Eingabeanschluss (224) des optischen Vereinigers (220) optisch verbindet;
- einen ersten optischen Filter (250) umfassend eine Vielzahl von Resonatoren (252, 254), die jeweils einen entsprechenden freien Spektralbereich haben, wobei ein erster Resonator (252) der genannten Vielzahl mit dem ersten optischen Weg (230) optisch gekoppelt ist und die übrigen Resonatoren der genannten Vielzahl mit dem genannten ersten Resonator optisch in Reihe gekoppelt sind;
- einen zweiten optischen Filter (260) umfassend eine Vielzahl von entsprechenden Resonatoren (262, 264), die jeweils einen entsprechenden freien Spektralbereich haben, wobei ein entsprechender erster Resonator (262) der genannten Vielzahl mit dem zweiten optischen Weg (240) optisch gekoppelt ist und die übrigen Resonatoren der genannten Vielzahl mit dem genannten ersten Resonator in Reihe gekoppelt sind; und
- ein Steuersystem (270, 272, 251, 253, 261, 263), das mit der Vielzahl von Resonatoren des ersten optischen Filters (250) und mit der Vielzahl von Resonatoren des zweiten optischen Filters (260) operativ verbunden ist, wobei das genannte Steuersystem zur Ausführung folgender Schritte vorgesehen ist:
a) Betätigen des ersten optischen Filters (250), so daß eine entsprechende Resonanz von jedem Resonator der genannten Vielzahl von Resonatoren innerhalb eines ersten Frequenzbands fällt, das eine Bandbreite kleiner oder gleich 15 GHz hat;
b) Betätigen des zweiten optischen Filters (260), so daß man eine erste Trennung erhält zwischen jeder Resonanz von mindestens einem Resonator des zweiten optischen Filters, die innerhalb der genannten optischen Bandbreite fällt, und einer entsprechenden Resonanz von mindestens einem anderen verschiedenen Resonator des zweiten optischen Filters, die der genannten jeden Resonanz am nächsten liegt, wobei die genannte erste Trennung größer oder gleich 25 GHz ist.

12. Vorrichtung nach Anspruch 11, worin die genannte Vielzahl von Resonatoren des ersten optischen Filters und die genannte Vielzahl von Resonatoren des zweiten optischen Filters jeweils zwei und nicht mehr als zwei Resonatoren umfassen.

13. Vorrichtung nach irgendeinem der Ansprüche 11 bis 12, worin die genannte Vielzahl von Resonatoren (252, 254) des ersten optischen Filters (250) zwischen dem ersten optischen Weg (230) und einem ersten Wellenleiter (256) optisch in Reihe gekoppelt ist und die genannte Vielzahl von Resonatoren (262, 264) des zweiten optischen Filters (260) zwischen dem zweiten optischen Weg (240) und einem zweiten Wellenleiter (266) optisch in Reihe gekoppelt ist.

14. Vorrichtung nach Anspruch 13, worin der erste Wellenleiter (256) des ersten optischen Filters (250) und der zweite Wellenleiter (266) des zweiten optischen Filters (260) der gleiche Wellenleiter sind, so daß der erste optische Filter (250) und der zweite optische Filter (260) den gleichen Wellenleiter (256, 266) teilen.

15. Optisches Kommunikationssystem (100) umfassend einen Sender (110), einen Empfänger (120), eine optische Leitung (130), die den Sender und den Empfänger optisch verbindet, und eine optische Vorrichtung (200) nach irgendeinem der Ansprüche 11 bis 14, wobei die optische Vorrichtung (200) entlang der optischen Leitung (130) gekoppelt ist.

## Revendications

1. Méthode pour filtrer un signal optique comprenant une pluralité de canaux se trouvant sur une grille de fréquences optiques également distancées par un espacement de fréquences donné et occupant une largeur de bande optique, **caractérisée par**:
a) diviser ledit signal optique en une première et une deuxième portion séparées spatialement, où ladite première portion comprend essentiellement les canaux qui si trouvent sur une première sous-grille comprenant une première série desdites fréquences optiques également distancées par le double dudit espacement de fréquences, et la deuxième portion comprend essentiellement les canaux restants qui se trouvent sur une deuxième sous-grille comprenant les fréquences optiques restantes de ladite grille;
b) actionner un premier filtre optique (250) comprenant une pluralité de résonateurs (252, 254) ayant chacun une plage spectrale libre respective, où un premier résonateur (252) de ladite pluralité est couplé optiquement à ladite première portion et les résonateurs restants de ladite pluralité sont couplés optiquement en série audit premier résonateur, de façon qu'une résonance respective de chacun de ladite pluralité de résonateurs soit comprise dans une première bande de fréquences ayant une largeur de bande inférieure ou égale à 15 GHz et comprenant un premier canal appartenant à la première portion;
c) actionner un deuxième filtre optique (260) comprenant une pluralité de résonateurs respectifs (262, 264) ayant chacun une plage spectrale libre respective, où un premier résonateur respectif (262) de ladite pluralité est couplé optiquement à ladite deuxième portion et les résonateurs restants de ladite pluralité sont couplés en série audit premier résonateur, de façon à obtenir une première séparation entre chaque résonance d'au moins un résonateur du deuxième filtre optique comprise dans ladite largeur de bande optique et une résonance respective d'au moins un autre résonateur différent du deuxième filtre optique la plus proche de ladite chaque résonance, ladite première séparation étant supérieure ou égale à 25 GHz; et
d) recombiner lesdites première et deuxième portions filtrées.

2. Méthode selon la revendication 1, où tous les résonateurs du premier filtre optique ont la même plage spectrale libre et tous les résonateurs du deuxième filtre optique ont la même plage spectrale libre respective.

3. Méthode selon la revendication 2, où la plage spectrale libre des résonateurs du premier et deuxième filtre optique est essentiellement égale à un multiple impair dudit espacement de fréquences et supérieure à la moitié de ladite largeur de bande optique.

4. Méthode selon la revendication précédente, où la plage spectrale libre des résonateurs du premier et/ou du deuxième filtre optique excède la moitié de la largeur de bande optique de plus dudit espacement de fréquences.

5. Méthode selon une quelconque des revendications précédentes, où dans l'étape b) le premier filtre optique est actionné en syntonisant au moins un résonateur du premier filtre optique de façon différente par rapport aux résonateurs restants et dans l'étape c) le deuxième filtre optique est actionné en syntonisant ledit au moins un résonateur du deuxième filtre optique de façon différente par rapport audit au moins autre résonateur différent du deuxième filtre optique.

6. Méthode selon une quelconque des revendications précédentes, où ladite première séparation est égale à un multiple pair de l'espacement de fréquences.

7. Méthode selon la revendication 6, où ladite chaque résonance dudit au moins un résonateur du deuxième filtre optique comprise dans ladite largeur de bande optique se trouve dans une distance de moitié de l'espacement de fréquences par rapport à la plus proche fréquence optique respective de ladite première sous-grille de fréquences optiques.

8. Méthode selon une quelconque des revendications précédentes, comprenant en outre les étapes suivantes:
e) actionner ledit premier filtre optique (250) de façon à obtenir une deuxième séparation entre ladite résonance respective d'au moins un résonateur du premier filtre optique par rapport à ladite résonance respective d'au moins un autre résonateur différent du premier filtre optique, ladite deuxième séparation étant supérieure ou égale à 25 GHz; et
f) actionner ledit deuxième filtre optique (260) de façon qu'une résonance respective de chacun de ladite pluralité de résonateurs du deuxième filtre optique soit comprise dans une deuxième bande de fréquences, différente de la première bande de fréquences, ayant une largeur de bande inférieure ou égale à 15 GHz et comprenant un deuxième canal appartenant à la deuxième portion.

9. Méthode selon la revendication 8, comprenant en outre, après l'étape c) et avant l'étape f), l'étape suivante:
g) syntoniser tous les résonateurs du deuxième filtre optique de façon à déplacer toutes les résonances respectives des résonateurs du deuxième filtre optique d'un intervalle de fréquence supérieur audit espacement de fréquences, tout en maintenant une distance entre ladite chaque résonance dudit au moins un résonateur du deuxième filtre optique par rapport à ladite résonance respective la plus proche dudit au moins autre résonateur différent du deuxième filtre optique non inférieure à ladite première séparation.

10. Méthode selon la revendication 9, où dans l'étape g) tous les résonateurs du deuxième filtre optique sont syntonisés essentiellement à l'unisson, de façon à déplacer également et simultanément toutes lesdites résonances respectives des résonateurs du deuxième filtre optique.

11. Dispositif optique (200), **caractérisé par**:
- un diviseur optique (210) ayant une porte d'entrée (212), une première porte de sortie (214) et une deuxième porte de sortie (216) et étant apte à recevoir par ladite porte d'entrée un signal optique comprenant une pluralité de canaux se trouvant sur une grille de fréquences optiques également distancées par un espacement de fréquences et occupant une largeur de bande optique, et où ledit diviseur optique (210) est apte à délivrer par ladite première et deuxième porte de sortie respectivement une première et une deuxième portion dudit signal optique, où ladite première portion comprend essentiellement les canaux qui si trouvent sur une première sous-grille de ladite grille comprenant une première série desdites fréquences optiques également distancées par le double dudit espacement de fréquences, et la deuxième portion comprend essentiellement les canaux restants qui se trouvent sur une deuxième sous-grille comprenant les fréquences optiques restantes de ladite grille;
- un combinateur optique (220) ayant une première (222) et deuxième (224) porte d'entrée respective et une porte de sortie respective (226; 228) et étant apte à combiner deux radiations optiques, entrées respectivement par la première et deuxième porte d'entrée, et à délivrer la radiation optique combinée par la porte de sortie respective;
- un premier parcours optique (230) reliant optiquement la première porte de sortie (214) du diviseur optique (210) à la première porte d'entrée (222) du combinateur optique (220);
- un deuxième parcours optique (240) reliant optiquement la deuxième porte de sortie (216) du diviseur optique (210) à la deuxième porte d'entrée (224) du combinateur optique (220);
- un premier filtre optique (250) comprenant une pluralité de résonateurs (252, 254) ayant chacun une plage spectrale libre respective, où un premier résonateur (252) de ladite pluralité est couplé optiquement au premier parcours optique (230), et les résonateurs restants de ladite pluralité sont couplés optiquement en série audit premier résonateur;
- un deuxième filtre optique (260) comprenant une pluralité de résonateurs respectifs (262, 264) ayant chacun une plage spectrale libre respective, où un premier résonateur respectif (262) de ladite pluralité est couplé optiquement au deuxième parcours optique (240), et les résonateurs restants de ladite pluralité sont couplés en série audit premier résonateur; et
- un système de contrôle (270, 272, 251, 253, 261, 263) relié de façon opérationnelle à la pluralité de résonateurs du premier filtre optique (250) et à la pluralité de résonateurs du deuxième filtre optique (260), ledit système de contrôle étant apte à exécuter les étapes suivantes:
a) actionner le premier filtre optique (250) de façon qu'une résonance respective de chacun de ladite pluralité de résonateurs soit comprise dans une première bande de fréquences ayant une largeur de bande inférieure ou égale à 15 GHz;
b) actionner le deuxième filtre optique (260) de façon à obtenir une première séparation entre chaque résonance d'au moins un résonateur du deuxième filtre optique comprise dans ladite largeur de bande optique et une résonance respective d'au moins un autre résonateur différent du deuxième filtre optique la plus proche de ladite chaque résonance, ladite première séparation étant supérieure ou égale à 25 GHz.

12. Dispositif selon la revendication 11, où ladite pluralité de résonateurs du premier filtre optique et ladite pluralité de résonateurs du deuxième filtre optique comprennent chacune deux et pas plus que deux résonateurs.

13. Dispositif selon une quelconque des revendications 11 à 12, où ladite pluralité de résonateurs (252, 254) du premier filtre optique (250) est couplée optiquement en série entre le premier parcours optique (230) et un premier guide d'onde (256) et ladite pluralité de résonateurs (262, 264) du deuxième filtre optique (260) est couplée optiquement en série entre le deuxième parcours optique (240) et un deuxième guide d'onde (266).

14. Dispositif selon la revendication 13, où le premier guide d'onde (256) du premier filtre optique (250) et le deuxième guide d'onde (266) du deuxième filtre optique (260) sont le même guide d'onde, de façon que le premier filtre optique (250) et le deuxième filtre optique (260) partagent le même guide d'onde (256, 266).

15. Système de communication optique (100) comprenant un transmetteur (110), un récepteur (120), une ligne optique (130) reliant optiquement le transmetteur et le récepteur et un dispositif optique (200) selon une quelconque des revendications 11 à 14, où le dispositif optique (200) est couplé le long de la ligne optique (130).
